# EUROPEAN PATENT SPECIFICATION

(11) **EP 2 304 869 B1**
(45) Date of publication and mention of the grant of the patent: **06.01.2016**
(21) Application number: 08772818.4
(22) Date of filing: 16.06.2008
(51) Int. Cl.: H02M 7/48, H02M 1/08, H02M 7/5387

(54) **METHOD AND APPARATUS FOR CONVERTING DIRECT CURRENT INTO AN ALTERNATING CURRENT**
VERFAHREN UND VORRICHTUNG ZUM UMWANDELN VON GLEICHSTROM IN EINEN WECHSELSTROM
MÉTHODE ET APPAREIL DE CONVERSION DE COURANT CONTINU EN COURANT ALTERNATIF

(43) Date of publication of application: 06.04.2011
(73) Proprietor: Xantrex Technology, Inc., Livermore, CA 94551 (US)
(72) Inventor: GARABANDIC, Djordje, Burnaby British Columbia V5H 2Z2 (CA)
(74) Representative: Grünecker Patent- und Rechtsanwälte PartG mbB
(86) International application number: PCT/CA2008/001155
(87) International publication number: WO 2009/152600

(56) References cited:
- EP-A2- 1 369 985
- DE-A1- 4 007 564
- DE-A1-102006 010 694
- US-B2- 7 046 534

## Description

### BACKGROUND OF THE INVENTION

### 1. Field of Invention

This invention relates generally to direct current to alternating current converters.

### 2. Description of Related Art

Direct current to alternating current (DC/AC) converters generally receive electrical energy from a direct current (DC) source and employ switches to convert the DC into alternating current (AC) waveform for powering a load. The DC source may be a photovoltaic panel or a fuel cell, for example. The load may include common loads such as motors, lighting components, or other electrical appliances. Alternatively the DC/AC converter may be connected to provide power to an AC power grid.

In DC/AC converters, average power flow is generally from the DC source to the AC load, which is known as inverter mode operation. However, if the load includes capacitive or inductive components, the DC/AC converter is required to also receive reactive power back from the load, in which case the converter must also be able to operate in a rectifier mode of operation.

Various converter circuit configurations may be used to implement DC/AC converters. In one circuit configuration pairs of series-connected semiconductor switches are connected in parallel with a DC source to form a bridge circuit. An AC load is connected between respective common nodes of the series-connected switch pairs. The semiconductor switches may be switched in response to high-frequency pulse width modulated control signals received at respective control inputs of the switches. The control signals generally cause the semiconductor switches to conduct current in a time sequence that produces a substantially sinusoidal AC waveform at the load.

It is generally desirable to configure DC/AC converter circuits to provide good electromagnetic compatibility (EMC), good conversion efficiency, and good fault tolerance. As described in US Patent 7,046,534 to Schmidt et al. EMC performance may be improved by configuring the converter circuit to prevent common mode voltages at the switching frequency from appearing at the DC source, while conversion efficiency may be improved by preventing current flow back to the source when the semiconductor switches are not conducting.

However DC/AC converter circuits, such as the bridge circuit described above and the circuit described in US Patent 7,046,534**,** generally include series-connected switch pairs across the DC source. Such circuits may be susceptible to failure caused by timing errors in the control signals. For example, in the event that both of a pair of series-connected switches are both in a conducting state even for a short period of time, a short circuit appears across the DC source and can cause a fault current to flow through the switches. The fault current may damage or destroy the switches and/or the DC source, possibly resulting in a catastrophic failure of the converter. Series-connected switches may become simultaneously conducting under a variety of conditions, such as timing jitter in the control signals, failure of one or more components in a controller, and/or failure of a power supply for powering control signal generation circuitry, for example.

Circuits employing series-connected switch pairs thus have little or no inherent fault tolerance and consequently in such circuits the control signals for controlling the switches should be generated such that simultaneous conduction of series-connected switches can never occur. Commonly, control signals are generated such that both the first and the second switches of the series-connected pair are not conducting during a dead-time period when commutation of the current between the first switch and the second switch occurs. The dead-time period must thus be of sufficient duration to ensure that a fault current condition cannot occur under worst case conditions. However operating the AC/DC converter with a sufficient time margin may reduce conversion efficiency and/or increase the total harmonic distortion (THD) of the AC waveform. Control signal generation should also take into account all conditions that could result in a fault current flowing. For this reason, many microprocessor based controllers utilize a digital signal processor (DSP) having sufficient processing power to implement control algorithms in real-time, at the cost of increased complexity of control circuitry.

There remains a need for DC/AC converter circuits that are less susceptible to failure.

Patent application DE 10 2006 010 694 A1 describes a method that involves closing and opening switch units based on polarity of half waves of alternating current voltage with an assigned clock sample for providing magnetized and freewheel currents to flow via a storage reactor during respective phases. Operating conditions are detected to determine if the reactor is sufficiently magnetized during application of the sample in magnetized phase. The units are clocked such that a high potential and input direct current voltage lie at inputs of the reactor in magnetized and free-wheel phases, respectively.

Patent application EP 1 369 985 A2 relates to an inverter for transforming a DC voltage into an AC current or an AC voltage. Between two direct current connections in a parallel wiring structure there is a intermediate power store and a bridge circuit with two parallel branches, to each of which are wired rectifier diodes in parallel. Certain rectifier diodes link to each other in single connecting paths in an opposed conducting direction. Each of two alternating current connections links individually via a connection node to one of the parallel branches between two switch units by means of a connecting wire, in which each has inductive chokes.

Patent application DE 4 007 564 A1 describes a power amplifier that feeds an inductive load. Four MOSFETs are connected in a bridge circuit, each transistor being connected to a free wheeling diode. Four bridge circuits are connected between the power supply. Each bridge circuit includes a MOSFET in series with a free-wheeling diode. The load is connected to the junctions of transistors and series diodes via inductances.

### SUMMARY OF THE INVENTION

It is an object of the present invention to provide a method and an apparatus for converting a direct current into an alternating current that obviate or mitigate at least one of the above disadvantages of the prior art.

This object is solved by the present invention as claimed in the independent claims. Advantageous and preferred embodiments of the invention are defined by the dependent claims.

In accordance with one aspect of the invention there is provided a method for converting a direct current received from a direct current source into an alternating current at first and second load nodes, the first and second load nodes for connecting a load, the source being connected to first and second source nodes, the first source node for receiving direct current from the source and the second source node for providing a return path for the direct current to the source. The method involves producing positive and negative half cycles of alternating current at the first and second load nodes, the positive half cycle being produced by causing first and second switching control signals to effect a plurality of positive half cycle switching sub-cycles by causing the first and second switching control signals to be asserted for a first time period of the positive half cycle switching sub-cycle and not asserted for a second time period of the positive half cycle switching sub-cycle. During each positive half cycle switching sub-cycle direct current flows from the source through a first supply current path into the first load node for the first time period. The first supply current path includes a first intermediate node, a first switch operable to selectively conduct current from the first source node to the first intermediate node in response to the first switching control signal, and a first inductor connected between the first intermediate node and the first load node. A first return current flows from the second load node through a first return current path for the first time period. The first return current path includes a second intermediate node, a second inductor connected between the second load node and the second intermediate node, and a second switch operable to selectively conduct current from the second intermediate node to the second source node in response to the second switching control signal. During the second time period, a first shunt control signal is asserted to cause the first return current to flow through a first shunt from the second intermediate node to the first intermediate node and through the first inductor back to the first load node, the first shunt being operably configured to prevent current from flowing from the first intermediate node to the second intermediate node and to selectively conduct current between the second intermediate node and the first intermediate node in response to the first shunt control signal. The negative half cycle is produced by causing third and fourth switching control signals to effect a plurality of negative half cycle switching sub-cycles by causing the third and fourth switching control signals to be asserted for a third time period of the negative half cycle switching sub-cycle and to be not asserted for a fourth time period of the negative half cycle switching sub-cycle. During each negative half cycle switching sub-cycle direct current flows from the source through a second supply current path into the second load node for the third time period. The second supply current path includes a third intermediate node, a third switch operable to selectively conduct current from the first source node to the third intermediate node in response to the third switching control signal, and a third inductor connected between the third intermediate node and the second load node. A second return current flows from the first load node through a second return current path for the third time period. The second return current path includes a fourth intermediate node, a fourth inductor connected between the first load node and the fourth intermediate node, and a fourth switch operable to selectively conduct current from the fourth intermediate node to the second source node in response to the fourth switching control signal. During the fourth time period, a second shunt control signal is asserted to cause the second return current to flow through a second shunt from the fourth intermediate node to the third intermediate node and through the third inductor back to the second load node, the second shunt being operably configured to prevent current from flowing from the third intermediate node to the fourth intermediate node and to selectively conduct current between the fourth intermediate node and the third intermediate node in response to the second shunt control signal.

The first shunt may include a fifth current switch and a first diode connected in series between the second intermediate node and the first intermediate node, the fifth current switch being operable to conduct current in response to the first shunt control signal, and the first diode being operable to block current flow between the first intermediate node and the second intermediate node.

The second shunt may include a sixth current switch and a second diode connected in series between the fourth intermediate node and the third intermediate node, the sixth current switch being operable to conduct current in response to the second shunt control signal, and the second diode being operable to block current flow between the third intermediate node and the fourth intermediate node.

The method may involve producing the first, second, third, and fourth switching control signals and the first and second shunt control signals.

Producing the first, second, third, and fourth switching control signals may involve producing first, second, third, and fourth pulse width modulated switching control signals.

Producing the first shunt control signal may involve causing the first shunt control signal to be asserted for substantially all of the positive half cycle, thereby causing the first shunt to permit current flow during substantially all of the positive half cycle, and producing the second shunt control signal may involve causing the second shunt control signal to be asserted for substantially all of the negative half cycle, thereby causing the second shunt to permit current flow during substantially all of the negative half cycle.

Producing the first shunt control signal may involve causing the first shunt control signal to be asserted during the second time periods of the positive half cycle, thereby causing the first shunt to selectively permit current flow during the second time periods, and producing the second shunt control signal may involve causing the second shunt control signal to be asserted during the fourth time periods of the negative half cycle, thereby causing the second shunt to selectively permit current flow during the fourth time periods.

Producing the first shunt control signal may involve inverting the first switching control signal and producing the second shunt control signal may involve inverting the third switching control signal.

Producing the first shunt control signal may involve causing the first shunt control signal to be asserted for a first portion of the positive half cycle and causing the first shunt control signal to be not asserted for a second portion of the positive half cycle, thereby causing the first shunt to selectively permit current flow during the first portion of the positive half cycle, and the first return current flows from the second intermediate node through a third diode to the first source node and from the second source node through a fourth diode to the first intermediate node during the second portion of the positive half cycle, and producing the second shunt control signal may involve causing the second shunt control signal to be asserted for a first portion of the negative half cycle and causing the second shunt control signal to be not asserted for a second portion of the negative half cycle, thereby causing the second shunt to selectively permit current flow during the first portion of the negative half cycle, and the second return current flows from the second intermediate node through a fifth diode to the first source node and from the second source node through a sixth diode to the first intermediate node during the second portion of the negative half cycle.

Producing the first and second switching control signals may involve causing each of the first and second switching control signals to be asserted to cause both the first switch and the second switch to permit current flow during the first time period, and producing the third and fourth switching control signals may involve causing each of the third and fourth switching control signals to be asserted to cause both the third switch and the fourth switch to permit current flow during the third time period.

The method may involve receiving a reference signal representing a desired output voltage waveform and producing the first, second, third, and fourth switching control signals and the first and second shunt control signals may involve producing first, second, third, and fourth switching control signals and the first and second shunt control signals in response to the reference signal.

The method may involve producing the reference signal.

Producing the reference signal may involve producing a sinusoidal reference signal having a frequency defining a desired frequency of an output voltage waveform across the first and second load nodes.

The load may include a power grid load and the method may further involve receiving a reference signal representing a grid voltage waveform of the power grid across the first and second load nodes and producing the first, second, third, and fourth switching control signals and the first and second shunt control signals may involve producing first, second, third, and fourth switching control signals and the first and second shunt control signals in response to the reference signal to cause an output current to be supplied to the power grid substantially in phase with the grid voltage waveform.

The load may involve a power grid load and the method may further involve receiving a signal representing a grid voltage waveform of the power grid across the first and second load nodes and producing a phase shifted reference signal in response to receiving the signal representing the grid voltage waveform, and producing the first, second, third, and fourth switching control signals and the first and second shunt control signals may involve producing first, second, third, and fourth switching control signals and the first and second shunt control signals in response to the phase shifted reference signal to cause an output current to be supplied to the power grid out of phase with the grid voltage waveform.

The method may involve, during a portion of the positive half cycle when the phase shifted reference signal is positive and the signal representing the grid voltage waveform is negative, causing the first and second switching control signals to be in a non-asserted state, and causing the first shunt control signal to effect a plurality of half cycle switching sub-cycles by causing the first shunt control signal to be asserted for a fifth time period of the positive half cycle switching sub-cycle and not asserted for a sixth time period of the positive half cycle switching sub-cycle. During the fifth time period the first return current flows through the first shunt from the second intermediate node to the first intermediate node and through the first inductor back to the first load node. During the sixth time period the first return current flows from the second intermediate node through a third diode to the first source node and from the second source node through a fourth diode to the first intermediate node and through the first inductor back to the first load node. The method also involves, during a portion of the negative half cycle when the phase shifted reference signal is negative and the signal representing the grid voltage waveform is positive, causing the third and fourth switching control signals to be in a non-asserted state, and causing the second shunt control signal to effect a plurality of half cycle switching sub-cycles by causing the second shunt control signal to be asserted for a seventh time period of the negative half cycle switching sub-cycle and not asserted for an eighth time period of the negative half cycle switching sub-cycle. During the seventh time period the second return current flows through the second shunt from the fourth intermediate node to the third intermediate node and through the third inductor back to the second load node. During the eighth time period the second return current flows from the fourth intermediate node through a fifth diode to the first source node and from the second source node through a sixth diode to the third intermediate node and through the third inductor back to the second load node.

In accordance with another aspect of the invention there is provided an apparatus for converting a direct current into an alternating current. The apparatus includes first and second source nodes, the first source node being operably configured to receive direct current from a direct current source and the second source node being operably configured to provide a return path for the direct current from the apparatus to the source. The apparatus also includes first and second load nodes for supplying alternating current produced by the apparatus to a load. The apparatus also includes a first supply current path including a first intermediate node, a first switch operable to selectively conduct current from the first source node to the first intermediate node in response to a first switching control signal, and a first inductor connected between the first intermediate node and the first load node. The apparatus also includes a first return current path including a second intermediate node, a second inductor connected between the second load node and the second intermediate node, and a second switch operable to selectively conduct current from the second intermediate node to the second source node in response to a second switching control signal. The apparatus further includes a first shunt operably configured to prevent current from flowing from the first intermediate node to the second intermediate node and to selectively conduct current between the second intermediate node and the first intermediate node in response to a first shunt control signal. The apparatus also includes a second supply current path including a third intermediate node, a third switch operable to selectively conduct current from the first source node to the third intermediate node in response to a third switching control signal, and a third inductor connected between the third intermediate node and the first load node. The apparatus also includes a second return current path including a fourth intermediate node, a fourth inductor connected between the second load node and the fourth intermediate node, and a fourth current switch operable to selectively conduct current from the fourth intermediate node to the second source node in response to a fourth switching control signal. The apparatus further includes a second shunt operably configured to prevent current from flowing from the third intermediate node to the fourth intermediate node and to selectively conduct current between the fourth intermediate node and the third intermediate node in response to a second shunt control signal. The apparatus also includes a controller operably configured to generate the first, second, third, and fourth switching control signals and the first and second shunt control signals to control the first, second, third, and fourth switches and the first and second shunts to produce positive and negative half cycles of the alternating current, the positive half cycle being produced by causing the first and second switching control signals to effect a plurality of positive half cycle switching sub-cycles by causing the first and second switching control signals to be asserted for a first time period of the positive half cycle switching sub-cycle and not asserted for a second time period of the positive half cycle switching sub-cycle. During each positive half cycle switching sub-cycle direct current flows from the source through the first supply current path into the first load node for the first time period and a first return current flows from the second load node through the first return current path for the first time period. During the second time period, the first shunt control signal is asserted to cause the first return current to flow through the first shunt from the second intermediate node to the first intermediate node and through the first inductor back to the first load node. The negative half cycle is produced by causing the switching control signals to effect a plurality of negative half cycle switching sub-cycles by causing the third and fourth switching control signals to be asserted for a third time period of the negative half cycle switching sub-cycle and to be not asserted for a fourth time period of the negative half cycle switching sub-cycle. During each negative half cycle switching sub-cycle direct current flows from the source through the second supply current path into the second load node for the third time period, and a second return current flows from the first load node through the second return current path for the third time period. During the fourth time period, the second shunt control signal is asserted to cause the second return current to flow through the second shunt from the fourth intermediate node to the third intermediate node and through the third inductor back to the second load node.

The second shunt may include a sixth current switch and a second diode connected in series between the fourth intermediate node and the third intermediate node, the sixth current switch being operable to conduct current in response to the second shunt control signal, and the second diode being operable to block current flow between the third intermediate node and the fourth intermediate node.

The apparatus may include a capacitor connected between the first and second load nodes, the capacitor being operable, in combination with the first, second, third, and fourth inductors, to attenuate alternating current frequency components at frequencies other than a fundamental frequency associated with the alternating current waveform.

The apparatus may include a controller operably configured to produce the first, second, third, and fourth switching control signals and the first and second shunt control signals.

The controller may be operably configured to produce first, second, third, and fourth pulse width modulated switching control signals.

The controller may be operably configured to produce the first shunt control signal by causing the first shunt control signal to be asserted for substantially all of the positive half cycle, thereby causing the first shunt to permit current flow during substantially all of the positive half cycle, and the controller is operably configured to produce the second shunt control signal by causing the second shunt control signal to be asserted for substantially all of the negative half cycle, thereby causing the second shunt to permit current flow during substantially all of the negative half cycle.

The controller may be operably configured to produce the first shunt control signal by causing the first shunt control signal to be asserted during the second time periods of the positive half cycle, thereby causing the first shunt to selectively permit current flow during the second time periods, and the controller is operably configured to produce the second shunt control signal by causing the second shunt control signal to be asserted during the fourth time periods of the negative half cycle, thereby causing the second shunt to selectively permit current flow during the fourth time periods.

The controller may be operably configured to produce the first shunt control signal by inverting the first switching control signal and to produce the second shunt control signal by inverting the third switching control signal.

The apparatus may include a third diode connected to conduct current between the second intermediate node and the first source node, a fourth diode connected to conduct current between the second source node and the first intermediate node, a fifth diode connected to conduct current between the fourth intermediate node and the first source node, and a sixth diode connected to conduct current between the second source node and the third intermediate node, and the controller may be operably configured to produce the first shunt control signal by causing the first shunt control signal to be asserted for a first portion of the positive half cycle and causing the first shunt control signal to be not asserted for a second portion of the positive half cycle, thereby causing the first shunt to selectively permit current flow during the first portion of the positive half cycle, and the first return current flows from the second intermediate node through the third diode to the first source node and from the second source node through the fourth diode to the first intermediate node during the second portion of the positive half cycle, and produce the second shunt control signal by causing the second shunt control signal to be asserted for a first portion of the negative half cycle and causing the second shunt control signal to be not asserted for a second portion of the negative half cycle, thereby causing the second shunt to selectively permit current flow during the first portion of the negative half cycle, and the second return current flows from the second intermediate node through the fifth diode to the first source node and from the second source node through the sixth diode to the first intermediate node during the second portion of the negative half cycle.

The controller may be operably configured to produce the first and second switching control signals by causing each of the first and second switching control signals to be asserted to cause both the first switch and the second switch to permit current flow during the first time period, and produce the third and fourth switching control signals by causing each of the third and fourth switching control signals to be asserted to cause both the third switch and the fourth switch to permit current flow during the third time period.

The controller may be operably configured to receive a reference signal representing a desired output voltage waveform and to produce the first, second, third, and fourth switching control signals and the first and second shunt control signals in response to the reference signal.

The controller may be operably configured to produce the reference signal.

The controller may be operably configured to produce a sinusoidal reference signal having a frequency defining a desired frequency of an output voltage waveform across the first and second load nodes.

The load may include a power grid load and the controller may be operably configured to receive a reference signal representing a grid voltage waveform of the power grid across the.first and second load nodes and to produce the first, second, third, and fourth switching control signals and the first and second shunt control signals in response to the reference signal to cause an output current to be supplied to the power grid substantially in phase with the grid voltage waveform.

The load may include a power grid load and the controller may be operably configured to receive a signal representing a grid voltage waveform of the power grid across the first and second load nodes, produce a phase shifted reference signal in response to receiving the signal representing the grid voltage waveform, and produce the first, second, third, and fourth switching control signals and the first and second shunt control signals in response to the phase shifted reference signal to cause an output current to be supplied to the power grid out of phase with the grid voltage waveform.

The controller may be operably configured to cause the first and second switching control signals to be in a non-asserted state during a portion of the positive half cycle when the phase shifted reference signal is positive and the signal representing the grid voltage waveform is negative and to cause the first shunt control signal to effect a plurality of half cycle switching sub-cycles by causing the first shunt control signal to be asserted for a fifth time period of the positive half cycle switching sub-cycle and not asserted for a sixth time period of the positive half cycle switching sub-cycle during the portion of the positive half cycle. During the fifth time period the first return current flows through the first shunt from the second intermediate node to the first intermediate node and through the first inductor back to the first load node, and during the sixth time period the first return current flows from the second intermediate node through a third diode to the first source node and from the second source node through a fourth diode to the first intermediate node and through the first inductor back to the first load node. The controller may also be operably configured to cause the third and fourth switching control signals to be in a non-asserted state during a portion of the negative half cycle when the phase shifted reference signal is negative and the signal representing the grid voltage waveform is positive to cause the second shunt control signal to effect a plurality of half cycle switching sub-cycles by causing the second shunt control signal to be asserted for a seventh time period of the negative half cycle switching sub-cycle and not asserted for an eighth time period of the negative half cycle switching sub-cycle during the portion of the negative half cycle. During the seventh time period the second return current flows through the second shunt from the fourth intermediate node to the third intermediate node and through the third inductor back to the second load node, and during the eighth time period the second return current flows from the fourth intermediate node through a fifth diode to the first source node and from the second source node through a sixth diode to the third intermediate node and through the third inductor back to the second load node.

The first shunt may include a fifth current switch and a first diode connected in series between the second intermediate node and the first intermediate node, the fifth current switch being operable to conduct current in response to the first shunt control signal, and the first diode being operable to block current flow between the first intermediate node and the second intermediate node.

The first and second load nodes may include respective first and second load terminals operably configured to facilitate connecting the load to the first and second load nodes.

The first and second source nodes may include respective first and second source terminals operably configured to facilitate connecting the source to the first and second source nodes.

In accordance with another aspect of the invention there is provided an apparatus for converting a direct current into an alternating current. The apparatus includes first and second source nodes, the first source node being operably configured to receive direct current from a direct current source and the second source node being operably configured to provide a return path for the direct current from the apparatus to the source. The apparatus also includes first and second load nodes for supplying alternating current produced by the apparatus to a load. The apparatus also includes a first supply current path including a first intermediate node, a first switch operable to selectively conduct current from the first source node to the first intermediate node in response to a first switching control signal, and a first inductor connected between the first intermediate node and the first load node. The apparatus also includes a first return current path including a second intermediate node, a second inductor connected between the second load node and the second intermediate node, and a second switch operable to selectively conduct current from the second intermediate node to the second source node in response to a second switching control signal. The apparatus further includes a first shunt operably configured to prevent current from flowing from the first intermediate node to the second intermediate node and to selectively conduct current between the second intermediate node and the first intermediate node in response to a first shunt control signal. The apparatus also includes a second supply current path including a third intermediate node, a third switch operable to selectively conduct current from the first source node to the third intermediate node in response to a third switching control signal, and a third inductor connected between the third intermediate node and the first load node. The apparatus also includes a second return current path including a fourth intermediate node, a fourth inductor connected between the second load node and the fourth intermediate node, and a fourth current switch operable to selectively conduct current from the fourth intermediate node to the second source node in response to a fourth switching control signal. The apparatus further includes a second shunt operably configured to prevent current from flowing from the third intermediate node to the fourth intermediate node and to selectively conduct current between the fourth intermediate node and the third intermediate node in response to a second shunt control signal. The apparatus also includes controlling provisions for generating the first, second, third, and fourth switching control signals and the first and second shunt control signals to control the first, second, third, and fourth switches and the first and second shunts to produce positive and negative half cycles of the alternating current, the positive half cycle being produced by causing the first and second switching control signals to effect a plurality of positive half cycle switching sub-cycles by causing the first and second switching control signals to be asserted for a first time period of the positive half cycle switching sub-cycle and not asserted for a second time period of the positive half cycle switching sub-cycle. During each positive half cycle switching sub-cycle direct current flows from the source through the first supply current path into the first load node for the first time period, and a first return current flows from the second load node through the first return current path for the first time period. During the second time period, the first shunt control signal is asserted to cause the first return current to flow through the first shunt from the second intermediate node to the first intermediate node and through the first inductor back to the first load node. The negative half cycle is produced by causing the switching control signals to effect a plurality of negative half cycle switching sub-cycles by causing the third and fourth switching control signals to be asserted for a third time period of the negative half cycle switching sub-cycle and to be not asserted for a fourth time period of the negative half cycle switching sub-cycle. During each negative half cycle switching sub-cycle direct current flows from the source through the second supply current path into the second load node for the third time period, and a second return current flows from the first load node through the second return current path for the third time period. During the fourth time period, the second shunt control signal is asserted to cause the second return current to flow through the second shunt from the fourth intermediate node to the third intermediate node and through the third inductor back to the second load node.

The controller provisions may include provisions for producing first, second, third, and fourth pulse width modulated switching control signals.

The controller provisions may include provisions for producing the first shunt control signal by causing the first shunt control signal to be asserted for substantially all of the positive half cycle, thereby causing the first shunt to permit current flow during substantially all of the positive half cycle, and the controller provisions may include provisions for producing the second shunt control signal by causing the second shunt control signal to be asserted for substantially all of the negative half cycle, thereby causing the second shunt to permit current flow during substantially all of the negative half cycle.

The controller provisions may include provisions for producing the first shunt control signal by causing the first shunt control signal to be asserted during the second time periods of the positive half cycle, thereby causing the first shunt to selectively permit current flow during the second time periods, and the controller provisions may include provisions for producing the second shunt control signal by causing the second shunt control signal to be asserted during the fourth time periods of the negative half cycle, thereby causing the second shunt to selectively permit current flow during the fourth time periods.

The controller provisions may include provisions for inverting the first switching control signal and the third switching control signal to respectively produce the second switching control signal and the fourth switching control signal.

The apparatus may include a third diode connected to conduct current between the second intermediate node and the first source node, a fourth diode connected to conduct current between the second source node and the first intermediate node, a fifth diode connected to conduct current between the fourth intermediate node and the first source node, and a sixth diode connected to conduct current between the second source node and the third intermediate node, and the controller provisions may include provisions for producing the first shunt control signal by causing the first shunt control signal to be asserted for a first portion of the positive half cycle and causing the first shunt control signal to be not asserted for a second portion of the positive half cycle, thereby causing the first shunt to selectively permit current flow during the first portion of the positive half cycle, and the first return current flows from the second intermediate node through the third diode to the first source node and from the second source node through the fourth diode to the first intermediate node during the second portion of the positive half cycle, and provisions for producing the second shunt control signal by causing the second shunt control signal to be asserted for a first portion of the negative half cycle and causing the second shunt control signal to be not asserted for a second portion of the negative half cycle, thereby causing the second shunt to selectively permit current flow during the first portion of the negative half cycle, and the second return current flows from the second intermediate node through the fifth diode to the first source node and from the second source node through the sixth diode to the first intermediate node during the second portion of the negative half cycle.

The controller provisions may include provisions for producing the first and second switching control signals by causing each of the first and second switching control signals to be asserted to cause both the first switch and the second switch to permit current flow during the first time period, and provisions for producing the third and fourth switching control signals by causing each of the third and fourth switching control signals to be asserted to cause both the third switch and the fourth switch to permit current flow during the third time period.

The controller provisions may include provisions for receiving a reference signal representing a desired output voltage waveform and provisions for producing the first, second, third, and fourth switching control signals and the first and second shunt control signals in response to the reference signal.

The controller provisions may include provisions for producing the reference signal.

The controller provisions may include provisions for producing a sinusoidal reference signal having a frequency defining a desired frequency of an output voltage waveform across the first and second load nodes.

The load may include a power grid load and the controller provisions may include provisions for receiving a reference signal representing a grid voltage waveform of the power grid across the first and second load nodes and provisions for producing the first, second, third, and fourth switching control signals and the first and second shunt control signals in response to the reference signal to cause an output current to be supplied to the power grid substantially in phase with the grid voltage waveform.

The load may include a power grid load and the controller provisions may include provisions for receiving a signal representing a grid voltage waveform of the power grid across the first and second load nodes, provisions for producing a phase shifted reference signal in response to receiving the signal representing the grid voltage waveform, and provisions for producing the first, second, third, and fourth switching control signals and the first and second shunt control signals in response to the phase shifted reference signal to cause an output current to be supplied to the power grid out of phase with the grid voltage waveform.

The controller provisions may include provisions for causing the first and second switching control signals to be in a non-asserted state during a portion of the positive half cycle when the phase shifted reference signal is positive and the signal representing the grid voltage waveform is negative, provisions for causing the first shunt control signal to effect a plurality of half cycle switching sub-cycles by causing the first shunt control signal to be asserted for a fifth time period of the positive half cycle switching sub-cycle and not asserted for a sixth time period of the positive half cycle switching sub-cycle during the portion of the positive half cycle. During the fifth time period the first return current flows through the first shunt from the second intermediate node to the first intermediate node and through the first inductor back to the first load node, and during the sixth time period the first return current flows from the second intermediate node through a third diode to the first source node and from the second source node through a fourth diode to the first intermediate node and through the first inductor back to the first load node. The controller provisions may also include provisions for causing the third and fourth switching control signals to be in a non-asserted state during a portion of the negative half cycle when the phase shifted reference signal is negative and the signal representing the grid voltage waveform is positive, and provisions for causing the second shunt control signal to effect a plurality of half cycle switching sub-cycles by causing the second shunt control signal to be asserted for a seventh time period of the negative half cycle switching sub-cycle and not asserted for an eighth time period of the negative half cycle switching sub-cycle during the portion of the negative half cycle. During the seventh time period the second return current flows through the second shunt from the fourth intermediate node to the third intermediate node and through the third inductor back to the second load node, and during the eighth time period the second return current flows from the fourth intermediate node through a fifth diode to the first source node and from the second source node through a sixth diode to the third intermediate node and through the third inductor back to the second load node.

Other aspects and features of the present invention will become apparent to those ordinarily skilled in the art upon review of the following description of specific embodiments of the invention in conjunction with the accompanying figures.

### BRIEF DESCRIPTION OF THE DRAWINGS

In drawings which illustrate embodiments of the invention,
- Figure **1**: is a schematic diagram of an apparatus for converting a direct current into an alternating current according to a first embodiment of the invention;
- Figure **2**: is a block diagram of a processor circuit used to implement a controller for controlling the apparatus shown in Figure **1**;
- Figure **3**: is a graphical depiction of control signals produced by the controller shown in Figure **2** when operating in accordance with one embodiment if the invention;
- Figure **4**: is a graphical depiction of control signals produced by the controller shown in Figure **2** when operating in accordance with an alternative embodiment if the invention; and
- Figure **5**: is a graphical depiction of control signals produced by the controller shown in Figure **2** when operating to supply power to a power grid load in accordance with an alternative embodiment if the invention.

### DETAILED DESCRIPTION

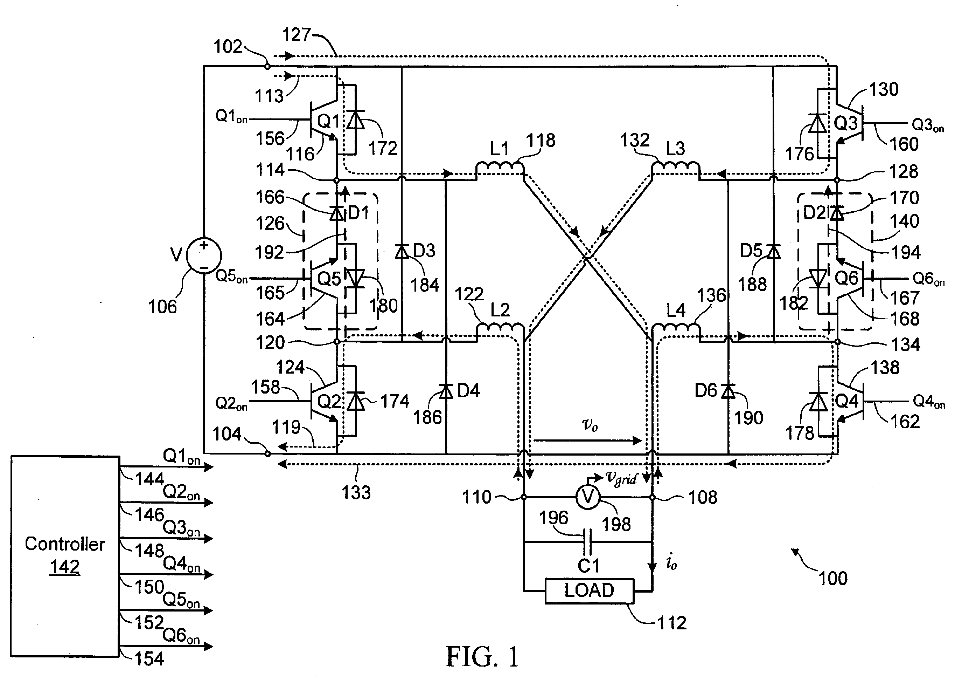

Referring to Figure **1**, an apparatus for converting a direct current into an alternating current in accordance with a first embodiment of the invention is shown generally at **100**. The apparatus **100** includes first and second source nodes **102** and **104**. The first source node **102** is operably configured to receive direct current from a DC source **106** and the second source node **104** is operably configured to provide a return path for the direct current from the apparatus **100** to the DC source **106**. The apparatus **100** also includes first and second load nodes **108** and **110** for supplying alternating current produced by the apparatus **100** to a load **112**. The source nodes **102** and **104** and the load nodes **108** and **110** may comprise electrical terminals such as screw terminals, spade lugs, or socket terminals, for example.

A first supply current path **113** through the apparatus **100** includes a first intermediate node **114** and a first switch (Q**1**) **116** connected between the first source node **102** and the first intermediate node **114**. The first switch **116** is operable to selectively conduct current from the first source node **102** to the first intermediate node **114** in response to a first switching control signal Q**1**ₒₙ. The apparatus **100** also includes a first inductor (L**1**) **118** connected between the first intermediate node **114** and the first load node **108**.

A first return current path **119** through the apparatus **100** includes a second intermediate node **120** and a second inductor (L**2**) **122** connected between the second load node **110** and the second intermediate node. The first return current path **119** also includes a second switch (Q**2**) **124** connected between the second intermediate node **120** and the second source node **104**. The second switch **124** is operable to selectively conduct current from the second intermediate node **120** to the second source node **104** in response to a second switching control signal Q**2**ₒₙ.

The apparatus **100** further includes a first shunt **126** connected between the first and second intermediate nodes **114** and **120**. The first shunt **126** is operably configured to prevent current from flowing from the first intermediate node **114** to the second intermediate node **120** and to selectively conduct current between the second intermediate node and the first intermediate node in response to a first shunt control signal Q**5**ₒₙ.

A second supply current path **127** through the apparatus **100** includes a third intermediate node **128** and a third switch (Q**3**) **130** connected between the first source node **102** and the third intermediate node. The third switch **130** is operable to selectively conduct current from the first source node **102** to the third intermediate node **128** in response to a third switching control signal Q**3**ₒₙ. The apparatus **100** also includes a third inductor (L**3**) **132** connected between the third intermediate node **128** and the second load node **110**.

A second return current path **133** through the apparatus **100** includes a fourth intermediate node **134** and a fourth inductor (L**4**) **136** connected between the first load node **108** and the fourth intermediate node. The second return current path **133** also includes a fourth current switch (Q**4**) **138** connected between the fourth intermediate node **134** and the second source node **104**. The fourth current switch **138** is operable to selectively conduct current from the fourth intermediate node **134** to the second source node **104** in response to a fourth switching control signal Q**4**ₒₙ.

The apparatus **100** further includes a second shunt **140** connected between the third and fourth intermediate nodes **128** and **134**. The second shunt **140** is operably configured to prevent current from flowing from the third intermediate node **128** to the fourth intermediate node **134** and to selectively conduct current between the fourth intermediate node and the third intermediate node in response to a second shunt control signal Q**6**ₒₙ.

In the embodiment shown, the first shunt **126** includes a fifth switch (Q**5**) **164** and a first diode (D**1**) **166** connected in series between the first intermediate node **114** and the second intermediate node **120**. The first diode **166** blocks current from flowing from the first intermediate node **114** to the second intermediate node **120**, and permits current flow from the second intermediate node to the first intermediate node when the fifth switch **164** is switched on. Similarly, in this embodiment, the second shunt **140** includes a sixth switch (Q**6**) **168** and a second diode (D**2**) **170** connected in series between the third intermediate node **128** and the fourth intermediate node **134**. The second diode **170** blocks current flowing from the third intermediate node **128** to the fourth intermediate node **134**, and permits current flow from the fourth intermediate node to the third intermediate node when the sixth switch **168** is switched on.

In embodiment shown, Q**1** to Q**6** are semiconductor switches such as an insulated gate bipolar transistor (IGBT), a metal-oxide-semiconductor field-effect transistor (MOSFET), a bipolar junction transistor (BJT), or a junction field-effect transistor (JFET). The first switch **116** includes a control signal input **156** for receiving the first switching control signal Q**1**ₒₙ for controlling the conduction state of the first switch between an "on" state, where the switch conducts current, and an "off' state, where the switch conducts no more than a small leakage current. Similarly the switches Q**2** to Q**6** each include respective control signal inputs **158, 160, 162, 165,** and **167** for receiving respective control signals Q**2**ₒₙ, Q**3**ₒₙ, Q**4**ₒₙ, Q**5**ₒₙ, and Q**6**ₒₙ for controlling the conduction state of the respective switches.

In the embodiment shown in Figure **1****,** the apparatus **100** also includes a third diode (D**3**) **184** connected to conduct current between the second intermediate node **120** and the first source node **102**, and a fourth diode (D**4**) **186** connected to conduct current between the second source node **104** and the first intermediate node **114**. The apparatus **100** also optionally includes a fifth diode (D**5**) **188** connected to conduct current between the fourth intermediate node **134** and the first source node **102**, and a sixth diode (D**6**) **190** connected to conduct current between the second source node **104** and the third intermediate node **128**. If included, the third, fourth, fifth and sixth diodes **184, 186, 188,** and **190** provide a current path back to the DC source **106** when none of the first, second, third or fourth switches **116, 124, 130** and **138**, or the shunts **126** and **140** are conducting, as described later herein.

In the embodiment shown in Figure **1**, the apparatus **100** also includes a capacitor **196** (C**1**). The capacitor **196**, together with the inductors **118**, **122**, **132**, and **136** provide low pass filtering of the alternating current by attenuating alternating current frequency components at frequencies other than a fundamental frequency associated with the alternating current waveform. For example, a capacitance value of the capacitor **196** and inductance values of the inductors **118**, **122**, **132**, and **136** may be selected to provide negligible attenuation at power grid frequencies (e.g. **50**Hz or **60**Hz) and high attenuation of higher harmonics of the power grid frequency that would otherwise cause distortion of the output alternating current waveform. In the circuit configuration shown in Figure **1**, additional circuit components may also be included (not shown) to provide further filtering of DC source current and/or AC output current. For example, such circuit components may include a capacitor across the source nodes **102** and **104** for filtering the DC source current.

In one embodiment the apparatus **100** may be configured as a grid-tied inverter that provides AC current to a power grid load, in which case the load **112** is the power grid, and the load nodes **108** and **110** are connected to the power grid. In other embodiments the apparatus **100** may be configured for islanded operation in which the apparatus provides AC current to a local load **112**, which is not connected to a power grid.

### Controller

The apparatus **100** further includes a controller **142**, which includes a plurality of outputs **144, 146, 148** and **150** for generating the first, second, third, and fourth switching control signals Q**1**ₒₙ, Q**2**ₒₙ, **Q**3ₒₙ, and Q**4**ₒₙ and outputs **152** and **154** for producing the first and second shunt control signals Q**5**ₒₙ and Q**6**ₒₙ. The outputs **144, 146, 148** and **150** of the controller **142** are coupled to respective control signal inputs **156**, **158**, **160**, and **162** of Q**1** - Q**4** and the outputs **152** and **154** are coupled to the control signal inputs **165** and **167** of Q**5** and Q**6** respectively. The switching control signals Q**1**ₒₙ - Q**4**ₒₙ are operable to control the first, second, third, and fourth switches **116, 124, 130,** and **138** and the shunt control signals Q**5**ₒₙ and Q**6**ₒₙ are operable to control respective first and second shunts **126** and **140** to produce positive and negative half cycles of an AC output waveform at the first and second load nodes **108** and **110**. In one embodiment the controller produces control signals Q**1**ₒₙ - Q**6**ₒₙ with voltage and current levels suitable for driving the switches Q**1** - Q**6** directly, and may be coupled directly to the respective control signal inputs **156, 158, 160, 162, 165,** and **167**. In other embodiments the control signals Q1₀ₙ - Q6ₒₙ may be logic level signals and the apparatus **100** may further include driver circuitry (not shown) for converting the logic level signals into suitable control signals for driving the respective switches Q**1** - Q**6**.

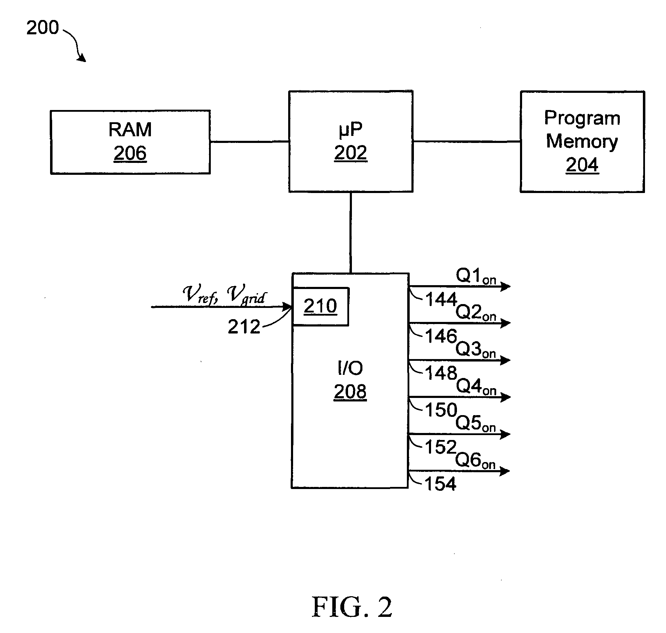

Referring to Figure **2**, in one embodiment the controller **142** may be implemented using a processor circuit as shown generally at **200**. In this embodiment, the processor circuit **200** includes a microprocessor **202**, a program memory **204**, a random access memory (RAM) **206**, and an input output port (I/O) **208**, all of which are in communication with the microprocessor **202**.

Program codes for directing the microprocessor **202** to carry out various functions are stored in the program memory **204**, which may be implemented as a flash memory, for example.

The I/O port **208** includes an interface **210** having a first input **212** for receiving a voltage reference signal v_{ref} or a grid voltage signal _{Vgrid} representing a voltage waveform of a power grid. The I/O port **208** further includes the outputs **144, 146, 148, 150, 152,** and **154** for producing the control signals Q**1**ₒₙ - Q**6**ₒₙ.

The RAM **206** may include volatile and/or non-volatile memory and provides storage for operating parameters and local storage for variables used during operation in accordance with the program codes.

In general, the program codes in the program memory **204** direct the microprocessor **202** to receive the reference signal v_{ref} or the grid voltage signal v_{grid} at the input **212** of the I/O port **208** and to produce the first, second, third, and fourth switching control signals (Q**1**ₒₙ - Q**4**ₒₙ) at the outputs **144**, **146, 148,** and **150**, and the first and second shunt control signals Q**5**ₒₙ and Q6ₒₙ at the outputs **152** and **154** to cause an alternating current to be supplied to the load **112**. The reference signal v_{ref} may be generated externally to the processor circuit **200**, for example by an external signal generator (not shown). Alternatively, the program codes in the program memory **204** may direct the microprocessor **202** to generate the reference signal v_{ref} internally by producing a set of digital values representing voltages defining a reference signal waveform. Such values may be generated using processor circuit timing functions that use a microprocessor clock signal as a timing reference, for example.

The processor circuit **200** may be implemented using a general purpose microprocessor, or alternatively may be implemented using a digital signal processing (DSP) processor such as the TMS**320**LF**2407**APGE processor produced by Texas Instruments of Dallas, Texas, for example. The TMS**320**LF**2407**APGE processor is optimized for digital motor control and power conversion applications and thus generally works well in this application. In other embodiments (not shown), the controller processor circuit **200** may be partly or fully implemented using a hardware circuit including analog electronic components, and/or discrete logic circuits, for example. Various other analog electronic components, and/or discrete logic circuits may be used to provide interfacing between the apparatus **100** and the processor circuit **200**.

A positive half cycle of the alternating current waveform is produced by causing the first and second switching control signals Q**1**ₒₙ and Q**2**ₒₙ and the first and second shunt control signal Q**5**ₒₙ to be asserted to effect a plurality of positive half cycle switching sub-cycles. During a first time period of each positive half cycle switching sub-cycle when the first and second switching control signals Q**1**ₒₙ and Q**2**ₒₙ are asserted, direct current flows from the DC source **106** through the first supply current path **113** into the first load node **108**, and a first return current flows from the second load node **110** through the first return current path **119** to the second source node **104**. During a second time period of each positive half cycle switching sub-cycle when the first and second switching control signals Q**1**ₒₙ and Q**2**ₒₙ are not asserted, the first shunt control signal Q**5**ₒₙ is asserted and the return current flows through the first shunt **126** along a first shunt current path **192** from the second intermediate node **120** to the first intermediate node **114**.

The negative half cycle of the alternating current waveform is produced by causing the third and fourth switching control signals Q**3**ₒₙ and Q**4**ₒₙ and the second shunt control signal Q**6**ₒₙ to be asserted to effect a plurality of negative half cycle switching sub-cycles. During a third time period of each negative half cycle switching sub-cycle when the third and fourth switching control signals Q**3**ₒₙ and Q**4**ₒₙ are asserted, direct current flows from the DC source **106** through the second supply current path **127** into the second load node **110**, and a second return current flows from the first load node **108** through the second return current path **133**. During a fourth time period of each negative half cycle switching sub-cycle when the third and fourth switching control signals Q**3**ₒₙ and Q**4**ₒₙ are not asserted, the second shunt control signal Q**6**_{**o**n} is asserted and the second return current flows through the second shunt **140** along a second shunt current path **194** from the fourth intermediate node 1**34** to the third intermediate node **128**.

In this embodiment, each of the switches Q**1** to Q**6** also includes a respective anti-parallel diode **172, 174, 176, 178, 180,** and **182** connected across the switch. Semiconductor switches are generally available with an anti-parallel diode co-packaged together with the switch. Most semiconductor switches generally only permit current flow in one direction, and the inclusion of an anti-parallel diode facilitates bi-directional current flow through the combination of switch and anti-parallel diode.

In the circuit configuration shown in Figure **1**, the first shunt **126** conducts current during the positive half cycle when the first and second switches **116** and **124** are not conducting and the second shunt **140** conducts current during the positive half cycle when the third and fourth switches **130** and **138** are not conducting. Advantageously, shunting the current through respective shunts **126** and **140** provides a path for current flow when the first and second switches **116** and **124** or the third and fourth switches **130** and **138** are not conducting, without returning current through the anti-parallel diodes **172, 174, 176, 178, 180,** and **182** to the DC source **106**. Returning current through anti-parallel diodes to the DC source is generally associated with higher conversion losses. Accordingly in the apparatus **100**, the anti-parallel diodes **172, 174, 176, 178, 180,** and **182** are only included for transient protection and are not required to conduct supply or return currents. Consequently, in the circuit configuration shown in Figure **1**, anti-parallel diodes that have a lower current rating than required in conventional inverter circuits may be used.

### Grid-tied Operation

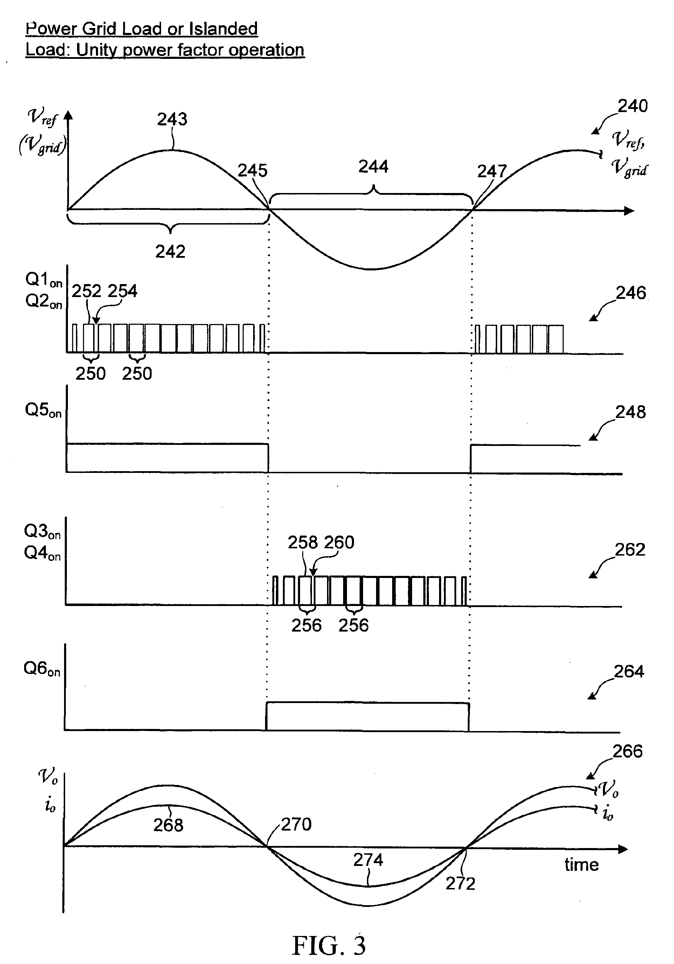

The operation of the apparatus **100** shown in Figure **1** to supply AC current to a power grid load **112** is described with reference to Figure **1** and Figure **3**. Referring to Figure **1**, in grid-tied operation, the load nodes **108** and **110** of the apparatus **100** are connected to a power grid. Generally, the power grid acts as a low impedance voltage source, and the apparatus **100** is controlled to act as a current source for supplying an output current to the power grid at the first and second load nodes **108** and **110**. In grid-tied operation, the apparatus **100** further includes a voltage sensor **198** connected between the first and second load nodes **108** and **110** for sensing the voltage vₒ appearing across the first and second load nodes. In this embodiment, the voltage vₒ is the power grid voltage. The voltage sensor **198** produces a grid voltage signal v_{grid} representing the power grid voltage and having a suitable amplitude for coupling to the input **212** of the I/O port **208** shown in Figure **2** and having a frequency and phase corresponding to the frequency and phase of a waveform of the power grid voltage at the load nodes **108** and **110**. The interface **210** (shown in Figure **2**) may include an analog-to-digital converter for converting an analog grid voltage signal v_{grid} into a digital representation thereof.

Referring to Figure **3**, a waveform of the reference signal v_{ref} is shown generally at **240**. The reference signal v_{ref} has a waveform that generally corresponds to the grid voltage signal v_{grid} produced by the voltage sensor 19**8**, and this embodiment the waveforms of the reference signal v_{ref} and the grid voltage signal v_{grid} are in phase. In other embodiments the reference signal v_{ref} may be shifted in phase with respect to the grid voltage signal v_{grid} to cause an output AC current waveform to be produced that is out of phase with the grid voltage waveform. The waveform of the reference signal v_{ref} includes periodically repeating positive and negative half-cycles **242** and **244**.

A waveform of the first and second switching control signals Q**1**ₒₙ and Q**2**ₒₙ is shown at **246**. The first and second switching control signals Q**1**ₒₙ and Q**2**ₒₙ control the respective conduction states of the first and second switches **116** and **124** during the positive half cycle **242**. In this embodiment the first and second switching control signals Q**1**ₒₙ and Q**2**ₒₙ have substantially the same waveforms and accordingly the first and second switches **116** and **124** are switched substantially simultaneously. However, it should be understood that actual signals for driving respective control inputs **156** and **158** of first and second switches **116** and **124** may be level shifted as required for driving the particular switching devices Q**1** and Q**2** that are used in the apparatus **100**. The first and second switching control signals Q**1**ₒₙ and Q**2**ₒₙ include a plurality of positive half cycle switching sub-cycles **250**. During each sub-cycle **250**, the first and second switching control signals Q**1**ₒₙ and Q**2**ₒₙ are in an asserted state for a first time period **252** and in a non-asserted state for a second time period **254**. In this embodiment, a duty cycle of the switching first and second control signals Q**1**ₒₙ and Q**2**ₒₙ is pulse width modulated such that the first time periods **252** of the switching sub-cycles **250** occupy progressively greater proportions of the sub-cycle than the second time periods **254**, towards a peak **243** of the positive half-cycle **242**. The first time periods **252** also occupy progressively lesser proportions of the sub-cycle than the second time periods **254** as the output current waveform approaches zero crossings (as shown at **245** and **247** in Figure **3**).

Referring back to Figure **1**, when the first switching control signal Q**1**ₒₙ is asserted, the first switch **116** is switched on to conduct current from the DC source **106** to the power grid load **112** along the first supply current path **113** and accordingly, current flows from the first source node **102**, to the first intermediate node **114**, through the first inductor **118**, and to the first load node **108**. When the second switching control signal Q**2**ₒₙ is asserted, the second switch **124** is switched on to conduct current along the first return current path **119** to the DC source **106** and accordingly, current flows back from the power grid load **112**, from the second load node **110**, through the second inductor **122**, to the second intermediate node **120**, and back to the second source node **104**. During respective first time periods **252** (shown in Figure **3**), when current flows along the first supply current path **113** and the first return current path **119**, the first diode **166** is reverse biased, thus blocking current from flowing between the first intermediate node **114** and the second intermediate node **120**. During the positive half cycles **242** the third and fourth switches **130** and **138** are switched off.

Referring back to Figure **3**, a waveform of the first shunt control signal Q**5**ₒₙ for controlling the conduction state of the fifth switch **164** is shown at **248**. In this embodiment the first shunt control signal Q**5**ₒₙ is asserted for substantially the entire positive half cycle **242**, thereby causing the fifth switch **164** to be on for substantially the entire positive half cycle. In an alternative embodiment, the first switching control signal Q**1**ₒₙ (or the second switching control signal Q**2**ₒₙ) may be inverted to produce the first shunt control signal Q**5**ₒₙ, such that the first shunt control signal is asserted when the first and second switching control signals Q**1**ₒₙ and Q**2**ₒₙ are not asserted. In this alternative embodiment, during the positive half cycle the fifth switch **164** is switched on to permit current flow through the shunt **126** when the first and second switches **116** and **124** are switched off.

When the first and second switching control signals Q**1**ₒₙ and Q**2**ₒₙ are not asserted, the first and second switches **116** and **124** are switched off thus interrupting the flow of current from the DC source **106** (except for a small leakage current through the first and second switches). However, the inductors **118** and **122** act to oppose changes in current flow, and current continues to flow into the first load node **108** and back from the second load node **110**, and is shunted through the first shunt current path **192** between the second intermediate node **120** and the first intermediate node **114**. The first shunt current path **192** thus provides a path through the fifth switch **164** and the first diode **166** for the first return current during the second time periods **254**, and consequently the first return current does not flow back to the DC source **106** through the third and fourth diodes **184** and **186** or the anti-parallel diodes **176** and **178**.

The AC output current waveform i₀ is shown at **266** in Figure **3**. An instantaneous amplitude of the positive half cycle of the output current i₀ is proportional to the time for which the first and second switching control signals Q**1**ₒₙ and Q**2**ₒₙ are asserted. At a peak **268** of the output current waveform iₒ, the first and second switching control signals Q**1**ₒₙ and Q**2**ₒₙ are predominantly in an asserted state, while proximate zero crossings of the output current waveform at **270**, the first and second switching control signals are predominantly in a non-asserted state. The inductors **118** and **122** resist changes in current flow and thus produce a generally smooth sinusoidal positive half cycle of the output current waveform iₒ at the load nodes **108** and **110**.

Still referring to Figure **3**, a waveform of the third and fourth switching control signals Q**3**ₒₙ and Q**4**ₒₙ is shown at **262**. The third and fourth switching control signals Q**3**ₒₙ and Q**4**ₒₙ control the respective conduction states of the third and fourth switches **130** and **138** during the negative half cycle **244**. The third and fourth switching control signals Q**3**ₒₙ and Q**4**ₒₙ include a plurality of negative half cycle switching sub-cycles **256**. During each sub-cycle **256**, the third and fourth switching control signals Q**3**ₒₙ and Q**4**ₒₙ are in an asserted state for a third time period **258** and in a non-asserted state for a fourth time period **260**. As in the case of the first and second switching control signals Q**1**ₒₙ and Q**2**ₒₙ, the third and fourth switching control signals Q**3**ₒₙ and Q**4**ₒₙ are pulse width modulated and have the same waveform timing, and thus in this embodiment, the third and fourth switches **130** and **138** are switched substantially simultaneously.

Referring back to Figure **1**, when the third switching control signal Q**3**ₒₙ is asserted, the third switch **130** is switched on to conduct current from the DC source **106** to the power grid load **112** along the second supply current path **127**, and accordingly current flows from the first source node **102**, to the third intermediate node **128**, through the third inductor **132**, and to the second load node **110**. When the fourth switching control signal Q**4**ₒₙ is asserted, the fourth switch **138** is switched on to conduct current from the power grid load **112** to the DC source **106** along the second return current path **133**, and accordingly current flows from the first load node **108**, through the fourth inductor **136**, to the fourth intermediate node **134**, and back to the second source node **104**. During respective third time periods **258** (shown in Figure **3**) when current flows along the second supply current path **127** and the second return current path **133**, the second diode **170** is reverse biased, thus blocking current from flowing between the third intermediate node **128** and the fourth intermediate node **134**. During the negative half cycles **244** the first and second switches **116** and **124** are switched off.

Referring back to Figure **3**, a waveform of the second shunt control signal Q**6**ₒₙ for controlling the conduction state of the sixth switch **168** is shown at **264**. In this embodiment the second shunt control signal Q**6**ₒₙ is asserted for substantially the entire negative half cycle **244**, thereby causing the sixth switch **168** to be on for substantially all of the negative half cycle. As described earlier, in an alternative embodiment the third switching control signal Q**3**ₒₙ (or the fourth switching control signal Q**4**ₒₙ) may be inverted to produce the second shunt control signal Q**6**ₒₙ, such that the second shunt control signal Q**6**ₒₙ is asserted when the third and fourth switching control signals Q**3**ₒₙ and Q**3**ₒₙ are not asserted. In this alternative embodiment, during the negative half cycle, the sixth switch **168** is switched on to permit current flow through the shunt **140** when the third and fourth switches **130** and **138** are switched off.

When the third and fourth switching control signals Q**3**ₒₙ and Q**4**ₒₙ are not asserted, the third and fourth switches **130** and **138** are switched off thus interrupting the flow of current from the DC source **106** (except for a small leakage current through the switches). However, the inductors **132** and **136** act to oppose changes in current flow and current continues to flow into the second load node **110** and back from the first load node **108**, and is shunted through the second shunt current path **194** between the fourth intermediate node **134** and the third intermediate node **128**. The second shunt current path **194** thus provides a path through the sixth switch **168** and the second diode **170** when the third and fourth switches **130** and **138** are switched off, and thus the second return current does not flow back to the DC source **106** through the fifth and sixth diodes **188** and **190** or the anti-parallel diodes **172** and **174**.

An instantaneous amplitude of the negative half cycle of the output current iₒ shown at **266** is thus proportional to the time for which the third and fourth switching control signals Q**3**ₒₙ and Q**4**ₒₙ are asserted. At a negative peak **274** of the output current waveform iₒ, the third and fourth switching control signals Q**3**ₒₙ and Q**4**ₒₙ are predominantly in an asserted state, while proximate a zero crossing point **272**, the third and fourth switching control signals are predominantly in a non-asserted state. The inductors **132** and **136** resist changes in current flow and thus produce a generally smooth sinusoidal negative half cycle of the output current waveform iₒ at the load nodes **108** and **110**.

In this embodiment, since the reference signal v_{ref} is in phase with the grid voltage signal v_{grid}, the output current iₒ is supplied to the power grid load **112** substantially in phase with the grid voltage (i.e. the voltage vₒ shown at **266**).

Advantageously, in the circuit configuration shown in Figure **1**, should the fourth switch **138** be unintentionally switched on while the first and second switches **116** and **124** are conducting current, the inductors **118** and **136** (L**1** and L**4**) are effectively connected in series with the first and second switches across the DC source **106** and limit current flow, thus reducing the possibility of damage to the first, second and fourth switches. Such a conduction state is generally referred to as a cross-conduction condition, and similar cross conduction conditions may occur between when the third and fourth switches **130** and **138** are conducting and the second switch **124** is unintentionally switched on. Under a cross conduction condition, for example when the first, second, and fourth switches **116**, **124**, and **138** are all simultaneously conducting, a short circuit does not appear across the source nodes **102** and **104**, as is the case with many prior-art circuit configurations. Furthermore the first diode **166** blocks current flow between the first and second intermediate nodes **114** and **120**, and the second diode **170** blocks current flow between the third and fourth intermediate nodes **128** and **134**, irrespective of the respective conduction states of the fifth and sixth switches **164** and **168**. Consequently, the circuit configuration shown in Figure **1** provides some inherent fault tolerance irrespective of where the switching and shunt control signals Q**1**ₒₙ - Q**6**ₒₙ are asserted or not.

The inductors **118**, **122**, **132** and **136** may comprise a high flux core material to keep the size of the inductors to a minimum. Conventional prior-art circuit configurations generally include only two inductors, while the circuit configuration shown in Figure **1** includes four inductors **118**, **122**, **132** and **136**. However, while each of the inductors **118**, **122**, **132** and **136** is required to handle the same peak current as in prior art configurations, advantageously, each of the inductors is only required to handle half of the RMS (route-mean-square) current compared to prior art circuit configurations. Consequently while two additional inductors are required in the circuit configuration shown in Figure **1**, lower RMS current requirements per inductor lead to a generally similar total inductor volumetric size when compared to prior art circuit configurations that include only two inductors.

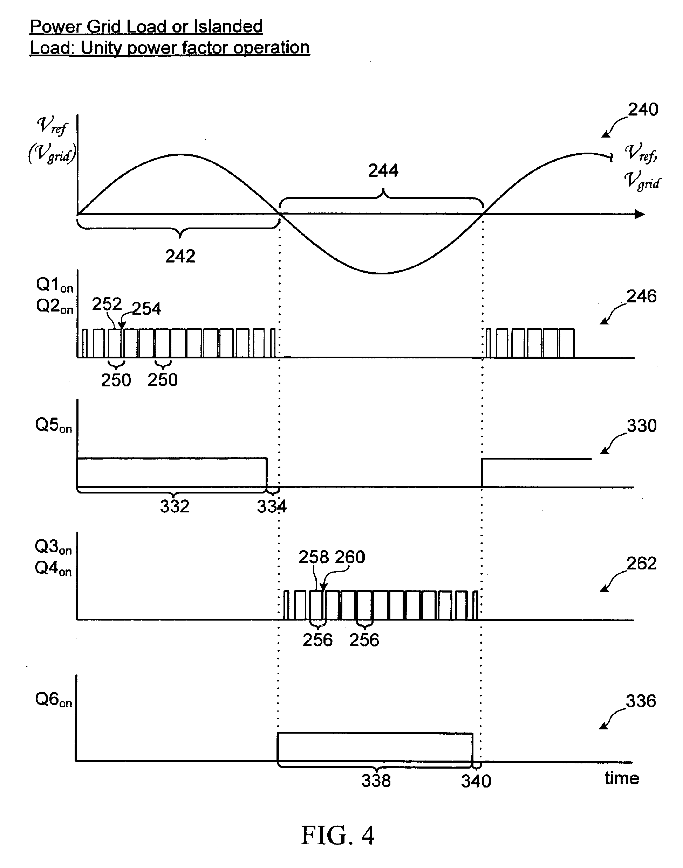

As shown in Figure **3**, the first shunt control signal Q**5**ₒₙ is asserted for substantially the entire positive half cycle **242**. At the end of the positive half cycles **242**, the current flowing through the inductors **118** and **122** is reduced to a small residual current. However at this time, the grid voltage is also relatively low and thus the rate of change of current through the inductors **118** and **122** is also low and may cause a waveform of the output current iₒ to be distorted in the region of the zero crossing points **270** and **272**. In an alternative embodiment, such distortions may be reduced by modifying the first and second shunt control signals Q**5**ₒₙ, and Q**6**ₒₙ such that the fifth and sixth switches **164** and **168** switch off just before the respective zero crossing points **245** and **247**. Referring to Figure **4**, a modified waveform of the first shunt control signal Q**5**ₒₙ is shown at **330** and a modified waveform of the second shunt control signal Q**6**ₒₙ is shown at **336**. The first shunt control signal Q**5**ₒₙ is in an asserted state for a first portion **332** of the positive half cycle **242** and in a non-asserted state during a second portion **334** of the positive half cycle. Referring back to Figure **1**, when the first and second switches **116** and **124** are switched off and when the first shunt control signal Q**5**ₒₙ is not asserted during the second portion **334** of the positive half cycle, the fifth switch **164** is also switched off. Accordingly, residual current through the inductors **118** and **122** is conducted back to the DC source **106** through the third and fourth diodes **184** and **186**, and is quickly reduced. Similarly, the second shunt control signal Q**6**ₒₙ is in an asserted state for a first portion **338** of the negative half cycle **244** and in a non-asserted state during a second portion **340** of the negative half cycle, thereby causing residual current through the inductors **132** and **136** to be conducted back to the DC source **106** through the fifth and sixth diodes **188** and **190**. Advantageously, in such embodiments the sinusoidal output current iₒ produced at the load nodes **108** and **110** may have lower total harmonic distortion (THD) than in embodiments where the first and second shunt control signals Q**5**ₒₙ and Q**6**ₒₙ are asserted for substantially all of the respective positive and negative half-cycles **242** and **244**.

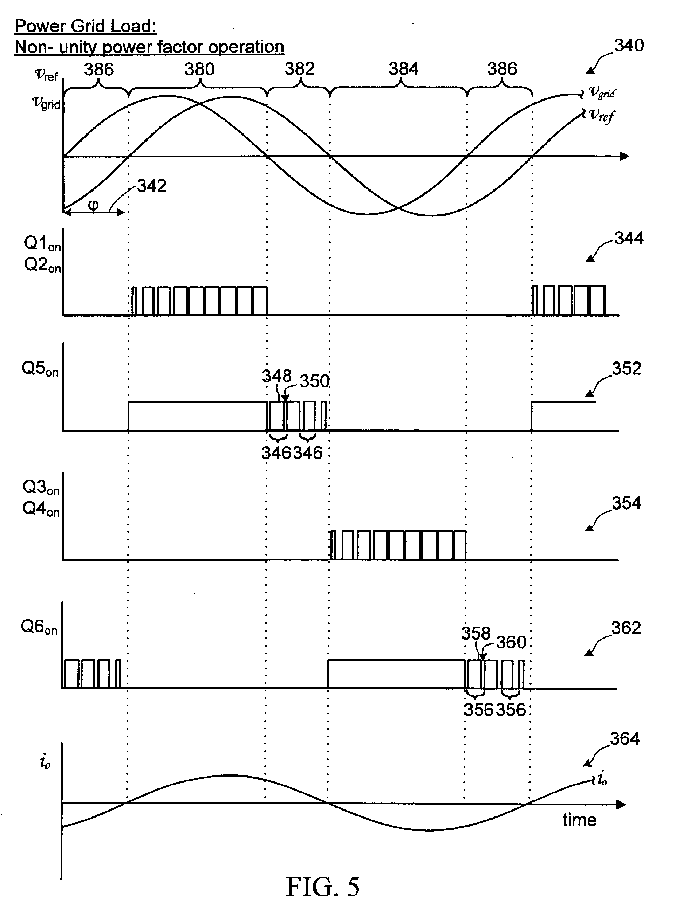

Referring to Figure **5**, in an alternative embodiment of the invention, the apparatus 1**00** shown in Figure **1** may be operated to produce an output current waveform that is out of phase with the grid voltage in order to compensate for other loads on the power grid that have a non-unity power factor. The grid voltage signal v_{grid} is shown at **340** in Figure **5**. The I/O port **208** of the processor circuit **200** (shown in Figure **2**) receives the grid voltage signal v_{grid} at the input **212** and produces a reference signal v_{ref} (also shown at **340** in Figure **5**) that is phase shifted with respect to the grid voltage signal v_{grid} by a phase angle of ϕ degrees, as shown at **342**. In Figure **5**, the phase angle ϕ is shown as being positive, but in general the phase angle ϕ may be positive or negative, depending on whether it is required to provide power factor compensation for a load with a leading or a lagging power factor.

In grid-tied operation, the reference signal waveform v_{ref} represents a desired output current waveform rather than a desired output voltage waveform, and the switching control signals Q**1**ₒₙ to Q**4**ₒₙ and the first and second shunt control signals Q**5**ₒₙ and Q**6**ₒₙ are respectively asserted to produce a desired out of phase output current iₒ as shown at **364**. A waveform of the first and second switching control signals Q**1**ₒₙ and Q**2**ₒₙ is shown at **344** and a waveform of the first shunt control signal Q**5**ₒₙ is shown at **352**.

During a portion **380** of the positive half cycle the first and second switching control signals Q**1**ₒₙ and Q**2**ₒₙ and the first shunt control signal Q**5**ₒₙ are asserted as described above in connection with Figure **3** and current flows along the first supply current path **113** and first return current path **119**, thereby supplying power to the power grid load **112** from the DC source **106**. During a portion **382** of the positive half cycle when the phase shifted reference signal v_{ref} is positive and the signal representing the grid voltage waveform v_{grid} is negative, reactive power is received from the power grid load **112**. During the portion **382** the first and second switching control signals Q**1**ₒₙ and Q**2**ₒₙ are in a non-asserted state, thereby preventing reactive currents from flowing back to the DC source **106**.

The first shunt control signal Q**5**ₒₙ includes a plurality of positive half cycle switching sub-cycles **346**. During each sub-cycle **346**, the shunt control signal Q5ₒₙ is an asserted state for fifth time periods, such as shown at **348**, and in a non-asserted state for sixth time periods, such as shown at **350**. During the fifth time period **348** the first return current flows through the first shunt **126** from the second intermediate node **120** to the first intermediate node **114** and through the first inductor **118** back to the first load node **108**. During the sixth time period **350** the first return current flows from the second intermediate node **120** through the third diode **184** to the first source node **102** and from the second source node **104** through the fourth diode **186** to the first intermediate node **114** and through the first inductor **118** back to the first load node**108**.

A waveform of the third and fourth switching control signals Q**3**ₒₙ and Q**4**ₒₙ is shown at **354** and a waveform of the second shunt control signal Q**6**ₒₙ is shown at **362**.

During a portion **384** of the negative half cycle the third and fourth switching control signals Q**3**ₒₙ and Q**4**ₒₙ and the second shunt control signal Q**6**ₒₙ are asserted as described above in connection with Figure **3** and current flows along the second supply current path **127** and the second return current path **133**, thereby supplying power to the power grid load **112** from the DC source **106**. During a portion **386** of the negative half cycle when the phase shifted reference signal v_{ref} is negative and the signal representing the grid voltage waveform v_{grid} is positive, reactive power is received from the power grid load **112**. During the portion **386** the third and fourth switching control signals Q**3**ₒₙ and Q**4**ₒₙ are in a non-asserted state, thereby preventing reactive currents from flowing back to the DC source **106**.

The second shunt control signal Q**6**ₒₙ includes a plurality of negative half cycle switching sub-cycles **356**. During each sub-cycle **356**, the shunt control signal Q**6**ₒₙ is an asserted state for seventh time periods, such as shown at **358**, and in a non-asserted state for eighth time periods, such as shown at **360**. During the seventh time period **358** the second return current flows through the second shunt **140** from the fourth intermediate node **134** to the third intermediate node **128** and through the third inductor **132** back to the second load node **110**. During the eighth time period **360** the second return current flows from the fourth intermediate node **134** through the fifth diode **188** to the first source node **102** and from the second source node **104** through the sixth diode **190** to the third intermediate node **128** and through the third inductor **132** back to the second load node **110**.

Advantageously, when the apparatus **100** is controlled in accordance with the control signals shown in Figure **5**, reactive power received back from the power grid load **112** during the fifth and seventh time periods **348** and **358** is shunted through the first and second current shunts **126** and **140** respectively and is not returned to the DC source **106** during the fifth and seventh time periods.

### Islanded Load Operation

The operation of the apparatus **100** shown in Figure **1** to supply AC current to an islanded load **112** is described with reference to Figure **1** and Figure **3**. In islanded load operation of the apparatus **100**, the controller **142** of Figure **1** receives or generates a reference signal v_{ref} having a frequency and amplitude defining a desired frequency and amplitude of an AC output voltage waveform vₒ (shown at **266**), and the apparatus **100** is controlled to act as a low impedance voltage source for powering the load **112**.

Referring to Figure **3** the reference signal v_{ref} shown at **240** and as described above, may be generated externally to the controller **142** shown in Figure 1 or processor circuit 2**00** shown in Figure **2**. Alternatively the reference signal v_{ref} may be generated internally by the processor circuit **200**.

In islanded load operation, the controller **142** produces the first, second, third, and fourth switching control signal waveforms as shown at **246** and **262** and the shunt control signal waveforms shown at **248** and **264** in response to the reference signal v_{ref} to cause the apparatus **100** to produce the desired AC output voltage vₒ across the load nodes **108** and **110**. The output voltage vₒ has a waveform having positive and negative half cycles that generally correspond to the positive and negative half cycles **242** and **244** of the reference signal v_{ref} shown at **240**. Current flow through the apparatus **100** in islanded load operation remains as described above in connection with grid-tied operation of the apparatus.

Whether operating the apparatus to power an islanded load or the a power grid load, in the circuit configuration shown in Figure **1** when the first, second, third, and fourth switches **116, 124, 130** and **138** are switched off, the DC source **106** is effectively isolated from the load **112** and current flows through the first and second shunts **126** and **140** during respective positive and negative half-cycles. Advantageously, isolation of the DC source **106** from the load **112** prevents common mode signals at the switching frequency from appearing at the DC source, thereby providing improved EMC performance and improved electrical safety at the DC source. The first and second shunts **126** and **140** also prevent current flow back to the DC source **106**, which would otherwise cause a reduction in conversion efficiency. Furthermore, the circuit configuration shown in Figure **1** has a further advantage over prior-art configurations in that the first, second, third, and fourth switches **116**, **124**, **130** and **138** and the DC source **106** are inherently protected from damage due to short circuit currents that may be caused in the event of control signal errors.

While specific embodiments of the invention have been described and illustrated, such embodiments should be considered illustrative of the invention only and not as limiting the invention as construed in accordance with the accompanying claims.

## Claims

1. A method for converting a direct current received from a direct current source (106) into an alternating current at first and second load nodes (108 and 110), the method comprising:
producing a positive half cycle of alternating current at the first and second load nodes (108 and 110) by;
directing current flows from the source through a first switch (116), a first intermediate node (114), and a first inductor (118) into the first load node (108) for a first time period, said first switch (116) operable to selectively conduct current from the first source node (102) to said first intermediate node (114);
causing a first return current to flow from the second load node (110) through a second intermediate node (120), a second switch (124), and a second inductor (122) coupled to the second load node (110), and a second switch (124) operable to selectively conduct current from said second intermediate node (120) to the second source node (104); and
during a second time period, causing said first return current to flow through a first shunt (126) from said second intermediate node (120) to said first intermediate node (114) and through said first inductor (118) back to the first load node (108), said first shunt (126) configured to prevent current from flowing from said first intermediate node (114) to said second intermediate node (120) and to selectively conduct current between said second intermediate node (120) and said first intermediate node (114) in response to a first shunt control signal (Q5ₒₙ);
producing a negative half cycle by:
directing current flows from the source through a third intermediate node (128), a third switch (130), and a third inductor (132) coupled to the second load node (110) for a third time period, said third switch (130) operable to selectively conduct current from the first source node (102) to said third intermediate node (128);
causing a second return current to flow from the first load node (108) through a fourth intermediate node (134), a fourth switch (Q4), and a fourth inductor (136) coupled to the first load node (108), said fourth switch (Q4) operable to selectively conduct current from said fourth intermediate node (134) to the second source node (104); and
during a fourth time period, causing said second return current to flow through a second shunt (140) from said fourth intermediate node (134) to said third intermediate node (128) and through said third inductor (132) back to the second load node (110), said second shunt (140) configured to prevent current from flowing from said third intermediate node (128) to said fourth intermediate node (134) and to selectively conduct current between said fourth intermediate node (134) and said third intermediate node (128) in response to a second shunt control signal (Q6ₒₙ).

2. The method of claim 1 wherein said first shunt (126) comprises a fifth current switch (164) and a first diode (166) connected in series between said second intermediate node (120) and said first intermediate node (114), said fifth current switch (164) being operable to conduct current in response to said first shunt control signal (Q5ₒₙ), and said first diode (166) being operable to block current flow between said first intermediate node (114) and said second intermediate node (120); and wherein said second shunt (140) comprises a sixth current switch (168) and a second diode (170) connected in series between said fourth intermediate node (134) and said third intermediate node (128), said sixth current switch (168) being operable to conduct current in response to said second shunt control signal (Q6ₒₙ), and said second diode (170) being operable to block current flow between said third intermediate node (128) and said fourth intermediate node (134).

3. The method of claim 1 or 2 wherein first, second, third, and fourth pulse width modulated switching control signals are produced to control said first, second, third and fourth switches (116, 124, 130, 138).

4. The method of one of claims 1-3 wherein said first shunt control signal (Q5ₒₙ) inverts a switching control signal to said first switch (116) and wherein said second shunt control signal (Q6ₒₙ) inverts a switching control signal to said third switch (130).

5. The method of one of claims 1-4 wherein said first shunt control signal (Q5ₒₙ) is asserted for a first portion of said positive half cycle and said first shunt control signal (Q5ₒₙ) is not asserted for a second portion of said positive half cycle, thereby causing said first shunt (126) to selectively permit current flow during said first portion of said positive half cycle, and wherein said first return current flows from said second intermediate node (120) through a third diode (184) to the first source node (102) and from the second source node (104) through a fourth diode (186) to said first intermediate node (114) during said second portion of said positive half cycle; and
said second shunt control signal (Q6ₒₙ) is asserted for a first portion of said negative half cycle and said second shunt control signal (Q6ₒₙ) is not asserted for a second portion of said negative half cycle, thereby causing said second shunt (140) to selectively permit current flow during said first portion of said negative half cycle, and wherein said second return current flows from said second intermediate node (120) through a fifth diode (188) to the first source node (102) and from the second source node (104) through a sixth diode (190) to said first intermediate node (114) during said second portion of said negative half cycle.

6. The method of one of claims 1-5 wherein the load comprises a power grid load and further comprising receiving a reference signal (V_{ref}) representing a grid voltage waveform of the power grid across the first and second load nodes (108 and 110) and wherein said first and second shunt control signals (Q5ₒₙ, Q6ₒₙ) and said first, second, third and fourth switches (116, 124, 130, 138) are controlled in response to said reference signal (V_{ref}) to cause an output current to be supplied to the power grid either substantially in phase with the grid voltage waveform or out of phase with the grid voltage waveform.

7. An apparatus for converting a direct current into an alternating current, the apparatus comprising:
first and second source nodes (102 and 104) coupled to a direct current source (106);
first and second load nodes (108 and 110) for supplying alternating current;
a first intermediate node (114);
a first switch (116) operable to selectively conduct current from said first source node (102) to said first intermediate node (114);
a first inductor (118) connected between said first intermediate node (114) and said first load node (108);
a second intermediate node (120);
a second inductor (122) connected between said second load node (110) and said second intermediate node (120);
a second switch (124) operable to selectively conduct current from said second intermediate node (120) to said second source node (104);
a first shunt (126) operably configured to prevent current from flowing from said first intermediate node (114) to said second intermediate node (120) and to selectively conduct current between said second intermediate node (120) and said first intermediate node (114) in response to a first shunt control signal (Q5ₒₙ);
a third intermediate node (128);
a third switch (130) operable to selectively conduct current from said first source node (102) to said third intermediate node (128);
a third inductor (132) connected between said third intermediate node (128) and said first load node (108);
a fourth intermediate node (134);
a fourth inductor (136) connected between said second load node (110) and said fourth intermediate node (134);
a fourth current switch (138) operable to selectively conduct current from said fourth intermediate node (134) to said second source node (104);
a second shunt (140) operably configured to prevent current from flowing from said third intermediate node (128) to said fourth intermediate node (134) and to selectively conduct current between said fourth intermediate node (134) and said third intermediate node (128) in response to a second shunt (140) control signal (Q6ₒₙ); and
a controller (142) operably configured to generate first, second, third and fourth switching control signals (Q1ₒₙ, Q2ₒₙ, Q3ₒₙ ,Q4ₒₙ) and said first and second shunt control signals (Q5ₒₙ, Q6ₒₙ) to control said first, second, third, and fourth switches (116, 124, 130, 138) and said first and second shunts (126, 140) to produce positive and negative half cycles of the alternating current;
said positive half cycle being produced by causing said first and second switching control signals (Q1ₒₙ, Q2ₒₙ) to direct current flows from the source through said first intermediate node (114), first switch (Q1) and first inductor (118) into said first load node (108) for said first time period;
direct a return current flow from said second load node (110) through said second intermediate node (120), second switch (124) and second inductor (122) for said first time period; and
during said second time period, said first shunt control signal (Q5ₒₙ) is asserted to cause said first return current to flow through said first shunt (126) from said second intermediate node (120) to said first intermediate node (114) and through said first inductor (118) back to the first load node (108);
said negative half cycle being produced by causing said third and fourth switching control signals (Q3ₒₙ, Q4ₒₙ) to:
direct current flows from the source through said third intermediate node (128), third inductor (132) and third switch (130) to said second load node (110) for said third time period;
direct a second return current flows from said first load node (108) through said fourth intermediate node (134), fourth inductor (136) and fourth switch (Q4) for said third time period; and
during said fourth time period, said second shunt control signal (Q6ₒₙ) is asserted to cause said second return current to flow through said second shunt (140) from said fourth intermediate node (134) to said third intermediate node (128) and through said third inductor (132) back to the second load node (110).

8. The apparatus of claim 7 wherein said first shunt (126) comprises a fifth current switch (164) and a first diode (166) connected in series between said second intermediate node (120) and said first intermediate node (114), said fifth current switch (164) being operable to conduct current in response to said first shunt control signal (Q5ₒₙ), and said first diode (166) being operable to block current flow between said first intermediate node (114) and said second intermediate node (120); and
said second shunt (140) comprises a sixth current switch (168) and a second diode (170) connected in series between said fourth intermediate node (134) and said third intermediate node (128), said sixth current switch (168) being operable to conduct current in response to said second shunt control signal (Q6ₒₙ), and said second diode (170) being operable to block current flow between said third intermediate node (128) and said fourth intermediate node (134).

9. The apparatus of claim 7 or 8 further comprising a capacitor (196) connected between said first and second load nodes (108 and 110), said capacitor (196) being operable, in combination with said first, second, third, and fourth inductors (118, 122, 132, 136), to attenuate alternating current frequency components at frequencies other than a fundamental frequency associated with the alternating current waveform.

10. The apparatus of one of claims 7-9 wherein said controller (142) is operably configured to produce first, second, third, and fourth pulse width modulated switching control signals (Q1ₒₙ, Q2ₒₙ, Q3ₒₙ ,Q4ₒₙ).

11. The apparatus of one of claims 7-10 wherein said controller (142) is operably configured to assert said first shunt control signal (Q5ₒₙ) for substantially all of said positive half cycle, thereby causing said first shunt (126) to permit current flow during substantially all of said positive half cycle, and wherein said controller (142) is operably configured to assert said second shunt control signal (Q6ₒₙ) for substantially all of said negative half cycle, thereby causing said second shunt (140) to permit current flow during substantially all of said negative half cycle.

12. The apparatus of one of claims 7-11 wherein said controller (142) is operably configured to assert said first shunt control signal (Q5ₒₙ) during said second time periods of said positive half cycle, thereby causing said first shunt (126) to selectively permit current flow during said second time periods, and wherein said controller (142) is operably configured to assert said second shunt control signal (Q6ₒₙ) during said fourth time periods of said negative half cycle, thereby causing said second shunt (140) to selectively permit current flow during said fourth time periods.

13. The apparatus of claim 12 wherein said controller (142) is operably configured to produce said first shunt control signal (Q5ₒₙ) by inverting said first switching control signal and to produce said second shunt control signal (Q6ₒₙ) by inverting said third switching control signal.

14. The apparatus of one of claims 7-13 further comprising:
a third diode (184) connected to conduct current between said second intermediate node (120) and said first source node (102);
a fourth diode (186) connected to conduct current between said second source node (104) and said first intermediate node (114);
a fifth diode (188) connected to conduct current between said fourth intermediate node (134) and said first source node (102); and
a sixth diode (190) connected to conduct current between said second source node (104) and said third intermediate node (128);
and wherein said controller (142) is operably configured to:
assert said first shunt control signal (Q5ₒₙ) for a first portion of said positive half cycle and not assert said first shunt control signal (Q5ₒₙ) for a second portion of said positive half cycle, thereby causing said first shunt (126) to selectively permit current flow during said first portion of said positive half cycle, and wherein said first return current flows from said second intermediate node (120) through said third diode (184) to the first source node (102) and from the second source node (104) through said fourth diode (186) to said first intermediate node (114) during said second portion of said positive half cycle; and
assert said second shunt control signal (Q6ₒₙ) for a first portion of said negative half cycle and not assert said second shunt control signal (Q6ₒₙ) for a second portion of said negative half cycle, thereby causing said second shunt (140) to selectively permit current flow during said first portion of said negative half cycle, and wherein said second return current flows from said second intermediate node (120) through said fifth diode (188) to the first source node (102) and from the second source node (104) through said sixth diode (190) to said first intermediate node (114) during said second portion of said negative half cycle.

15. The apparatus of one of claims 7-14 wherein the load comprises a power grid load and wherein said controller (142) is operably configured to receive a reference signal (V_{ref}) representing a grid voltage waveform of the power grid across said first and second load nodes (108 and 110) and to produce said first, second, third, and fourth switching control signals (Q1ₒₙ, Q2ₒₙ, Q3ₒₙ ,Q4ₒₙ) and said first and second shunt control signals (Q5ₒₙ, Q6ₒₙ) in response to said reference signal (V_{ref}) to cause an output current to be supplied to the power grid either substantially in phase with the grid voltage waveform or out of phase with the grid voltage waveform.

## Patentansprüche

1. Verfahren zur Umwandlung eines Gleichstroms, der aus einer Gleichstromquelle (106) empfangen wird, in einen Wechselstrom an einem ersten und einem zweiten Lastknoten (108 und 110), wobei das Verfahren umfasst:
Erzeugen einer positiven Halbwelle eines Wechselstroms an dem ersten und dem zweiten Lastknoten (108 und 110) durch:
Leiten von Stromflüssen von der Quelle durch einen ersten Schalter (116), einen ersten Zwischenknoten (114) und eine erste Induktivität (118) in den ersten Lastknoten (108) während einer ersten Zeitspanne, wobei der erste Schalter (116) ausgebildet ist, Strom von einem ersten Quellenknoten (102) selektiv zu dem ersten Zwischenknoten (114) zu leiten;
Bewirken, dass ein erster Rückstrom von dem zweiten Lastknoten (110) durch einen zweiten Zwischenknoten (120), einen zweiten Schalter (124) und eine mit dem zweiten Lastknoten (110) verbundene zweite Induktivität (122) fließt, wobei der zweite Schalter (124) ausgebildet ist, Strom von dem zweiten Zwischenknoten (120) selektiv zu einem zweiten Quellenknoten (104) zu leiten; und
Bewirken während einer zweiten Zeitspanne, dass der erste Strom durch einen ersten Nebenschlussstromkreis (126) von dem zweiten Zwischenknoten (120) zu dem ersten Zwischenknoten (114) und durch die erste Induktivität (118) zurück zu dem ersten Lastknoten (108) fließt, wobei der erste Nebenschlussstromkreis (126) ausgebildet ist, einen Stromfluss von dem ersten Zwischenknoten (114) zu dem zweiten Zwischenknoten (120) zu verhindern und selektiv Strom zwischen dem zweiten Zwischenknoten (120) und dem ersten Zwischenknoten (114) in Reaktion auf ein erstes Nebenschlusssteuersignal (Q5ₒₙ) zu leiten;
Erzeugen einer negativen Halbwelle durch:
Leiten von Stromflüssen von der Quelle durch einen dritten Zwischenknoten (128), einen dritten Schalter (130) und eine mit dem zweiten Lastknoten (110) verbundene dritte Induktivität (132) während einer dritten Zeitspanne, wobei der dritte Schalter (130) ausgebildet ist, Strom von dem ersten Quellenknoten (102) selektiv zu dem dritten Zwischenknoten (128) zu leiten;
Bewirken, dass ein zweiter Rückstrom von dem ersten Lastknoten (108) durch einen vierten Zwischenknoten (134), einen vierten Schalter (Q4) und eine mit dem ersten Lastknoten (108) verbundene vierte Induktivität (136) fließt, wobei der vierte Schalter (Q4) ausgebildet ist, Strom von dem vierten Zwischenknoten (134) selektiv zu dem zweiten Quellenknoten (104) zu leiten; und
Bewirken während einer vierten Zeitspanne, dass der zweite Rückstrom durch einen zweiten Nebenschlussstromkreis (140) von dem vierten Zwischenknoten (134) zu dem dritten Zwischenknoten (128) und durch die dritte Induktivität (132) zurück zu dem zweiten Lastknoten (110) fließt, wobei der zweite Nebenschlussstromkreis (140) ausgebildet ist, einen Stromfluss von dem dritten Zwischenknoten (128) zu dem vierten Zwischenknoten (134) zu verhindern und selektiv Strom zwischen dem vierten Zwischenknoten (134) und dem dritten Zwischenknoten (128) in Reaktion auf ein zweites Nebenschlusssteuersignal (Q6ₒₙ) selektiv zu leiten.

2. Verfahren nach Anspruch 1, wobei der erste Nebenschlussstromkreis (126) einen fünften Stromschalter (164) und eine erste Diode (166), die zwischen dem zweiten Zwischenknoten (120) und dem ersten Zwischenknoten (114) in Reihe geschaltet sind, wobei der fünfte Stromschalter (164) ausgebildet ist, Strom in Reaktion auf das erste Nebenschlusssteuersignal (Q5ₒₙ) zu leiten, und wobei die erste Diode (166) ausgebildet ist, einen Stromfluss zwischen dem ersten Zwischenknoten (114) und dem zweiten Zwischenknoten (120) zu blockieren; und wobei der zweite Nebenschlussstromkreis (140) einen sechsten Stromschalter (168) und eine zweite Diode (170) aufweist, die zwischen dem vierten Zwischenknoten (134) und dem dritten Zwischenknoten (128) in Reihe geschaltet sind, wobei der sechste Stromschalter (168) ausgebildet ist, Strom in Reaktion auf das zweite Nebenschlusssteuersignal (Q6ₒₙ) zu leiten, und wobei die zweite Diode (170) ausgebildet ist, einen Stromfluss zwischen den dritten Zwischenknoten (128) und dem vierten Zwischenknoten (124) zu blockieren.

3. Verfahren nach Anspruch 1 oder 2, wobei ein erstes, ein zweites, ein drittes und ein viertes pulsbreitenmoduliertes Schaltsteuersignal erzeugt werden, um den ersten, den zweiten, den dritten und den vierten Schalter (116, 124, 130, 138) zu steuern.

4. Verfahren nach einem der Ansprüche 1-3, wobei das erste Nebenschlusssteuersignal (Q5ₒₙ) ein Schaltsteuersignal für den ersten Schalter (116) invertiert und wobei das zweite Nebenschlusssteuersignal (Q6ₒₙ) ein Schaltsteuersignal für den dritten Schalter (130) invertiert.

5. Verfahren nach einem der Ansprüche 1-4, wobei das erste Nebenschlusssteuersignal (Q5ₒₙ) während eines ersten Teils der positiven Halbwelle gesetzt und das erste Nebenschlusssteuersignal (Q5ₒₙ) während eines zweiten Teils der positiven Halbwelle nicht gesetzt wird, wodurch bewirkt wird, dass der erste Nebenschlussstromkreis (126) selektiv einen Stromfluss während des ersten Teils der positiven Halbwelle zulässt, und wobei der erste Strom von dem zweiten Zwischenknoten (120) durch eine dritte Diode (184) zu dem ersten Quellenknoten (102) und von dem zweiten Quellenknoten (104) durch eine vierte Diode (186) zu dem ersten Zwischenknoten (114) während des zweiten Teils der positiven Halbwelle fließt; und
wobei das zweite Nebenschlusssteuersignal (Q6ₒₙ) während eines ersten Teils der negativen Halbwelle gesetzt und das zweite Nebenschlusssteuersignal (Q6ₒₙ) während eines zweiten Teils der negativen Halbwelle nicht gesetzt wird, wodurch bewirkt wird, dass der zweite Nebenschlussstromkreis (140) selektiv einen Stromfluss während des ersten Teils der negativen Halbwelle zulässt, und wobei der zweite Strom von dem zweiten Zwischenknoten (120) durch eine fünfte Diode (188) zu dem ersten Quellenknoten (102) und von dem zweiten Quellenknoten (104) durch eine sechste Diode (190) zu dem ersten Zwischenknoten (114) während des zweiten Teils der negativen Halbwelle fließt.

6. Verfahren nach einem der Ansprüche 1-5, wobei die Last eine Last des Leistungsversorgungsnetzes umfasst und wobei das Verfahren ferner Empfangen eines Referenzsignals (V_{ref}) umfasst, das eine Signalform der Netzspannung des Leistungsversorgungsnetzes zwischen dem ersten und dem zweiten Lastknoten (108 und 110) repräsentiert, und wobei das erste und das zweite Nebenschlusssteuersignal (Q5ₒₙ, Q6ₒₙ) und der erste, der zweite, der dritte und der vierte Schalter (116, 124, 130, 138) in Reaktion auf das Referenzsignal (V_{ref}) so gesteuert werden, dass bewirkt wird, dass ein Ausgangsstrom dem Leistungsversorgungsnetz im Wesentlichen in Phase mit der Signalform der Netzspannung oder außer Phase mit der Signalform der Netzspannung zugeführt wird.

7. Vorrichtung zur Umwandlung eines Gleichstroms in einen Wechselstrom, wobei die Vorrichtung umfasst:
einen ersten und einen zweiten Quellenknoten (102 und 104), die mit einer Gleichstromquelle (106) verbunden sind;
einen ersten und einen zweiten Lastknoten (108 und 110) zur Bereitstellung von Wechselstrom;
einen ersten Zwischenknoten (114);
einen ersten Schalter (116), der ausgebildet ist, selektiv Strom von dem ersten Quellenknoten (102) zu dem ersten Zwischenknoten (114) zu leiten;
eine erste Induktivität (118), die zwischen dem ersten Zwischenknoten (114) und dem ersten Lastknoten (108) angeschlossen ist;
einen zweiten Zwischenknoten (120);
eine zweite Induktivität (122), die zwischen dem zweiten Lastknoten (110) und
dem zweiten Zwischenknoten (120) angeschlossen ist;
einen zweiten Schalter (124), der ausgebildet ist, selektiv Strom von dem zweiten Zwischenknoten (120) zu dem zweiten Quellenknoten (104) zu leiten;
einen ersten Nebenschlussstromkreis (126), der funktionsmäßig ausgebildet ist, einen Stromfluss von dem ersten Zwischenknoten (114) zu dem zweiten Zwischenknoten (120) zu verhindern und selektiv Strom zwischen dem zweiten Zwischenknoten (120) und dem ersten Zwischenknoten (114) in Reaktion auf ein erstes Nebenschlusssteuersignal (Q5ₒₙ) zu leiten;
einen dritten Zwischenknoten (128);
einen dritten Schalter (130), der ausgebildet ist, selektiv Strom von dem ersten Quellenknoten (102) zu dem dritten Zwischenknoten (128) zu leiten;
eine dritte Induktivität (132), die zwischen dem dritten Zwischenknoten (128) und dem ersten Lastknoten (108) angeschlossen ist;
einen vierten Zwischenknoten (134);
eine vierte Induktivität (136), die zwischen dem zweiten Lastknoten (110) und dem vierten Zwischenknoten (134) angeschlossen ist;
einen vierten Stromschalter (128), der ausgebildet ist, selektiv Strom von dem vierten Zwischenknoten (134) zu dem zweiten Quellenknoten (104) zu leiten;
einen zweiten Nebenschlussstromkreis (140), der funktionsmäßig ausgebildet ist, einen Stromfluss von dem dritten Zwischenknoten (128) zu dem vierten Zwischenknoten (134) zu verhindern und selektiv Strom zwischen dem vierten Zwischenknoten (134) und dem dritten Zwischenknoten (128) in Reaktion auf ein zweites Nebenschlusssteuersignal (Q6ₒₙ) zu leiten; und
eine Steuerung (142), die funktionsmäßig ausgebildet ist, ein erstes, ein zweites, ein drittes und ein viertes Schaltsteuersignal (Q1ₒₙ, Q2ₒₙ, Q3ₒₙ, Q4ₒₙ) und das erste und das zweite Nebenschlusssteuersignal (Q5ₒₙ, Q6ₒₙ) zu erzeugen, um den ersten, den zweiten, den dritten und den vierten Schalter (116, 124, 130, 138) und den ersten und den zweiten Nebenschlussstromkreis (126, 140) so zu steuern, dass sie eine positive und eine negative Halbwelle des Wechselstroms erzeugen;
wobei die positive Halbwelle erzeugt wird, indem das erste und das zweite Schaltsteuersignal (Q1ₒₙ, Q2ₒₙ) veranlasst werden, Stromflüsse von der Quelle durch den ersten Zwischenknoten (114), den ersten Schalter (Q1) und die erste Induktivität (118) in den ersten Lastknoten (108) für eine erste Zeitspanne zu leiten;
einen Rückstromfluss von dem zweiten Lastknoten (110) durch den zweiten Zwischenknoten (120), den zweiten Schalter (124) und die zweite Induktivität (122) während der ersten Zeitspanne zu lenken; und
wobei während der zweiten Zeitspanne das erste Nebenschlusssteuersignal (Q5ₒₙ) gesetzt ist, so dass bewirkt wird, dass der erste Rückstrom durch den ersten Nebenschlussstromkreis (126) von dem zweiten Zwischenknoten (120) zu dem ersten Zwischenknoten (114) und durch die erste Induktivität (118) zurück zu dem ersten Lastknoten (108) fließt;
wobei die negative Halbwelle erzeugt wird, indem das dritte und das vierte Schaltersteuersignal (Q3ₒₙ, Q4ₒₙ) veranlasst werden, um:
zu veranlassen, dass Strom von der Quelle durch den dritten Zwischenknoten (128), die dritte Induktivität (132) und den dritten Schalter (130) zu dem zweiten Lastknoten (110) während der dritten Zeitspanne fließt;
zu veranlassen, dass ein zweite Rückstrom von dem ersten Lastknoten (108) durch den vierten Zwischenknoten (134), die vierte Induktivität (136) und den vierten Schalter (Q4) während der dritten Zeitspanne fließt; und
wobei während der vierten Zeitspanne das zweite Nebenschlusssteuersignal (Q6ₒₙ) gesetzt ist, um zu veranlassen, dass der zweite Rückstrom durch den zweiten Nebenschlussstromkreis (140) von dem vierten Zwischenknoten (134) zu dem dritten Zwischenknoten (128) und durch die dritte Induktivität (132) zurück zu dem zweiten Lastknoten (110) fließt.

8. Vorrichtung nach Anspruch 7, wobei der erste Nebenschlussstromkreis (126) einen fünften Stromschalter (164) und eine erste Diode (166) aufweist, die zwischen dem zweiten Zwischenknoten (120) und dem ersten Zwischenknoten (114) in Reihe geschaltet sind, wobei der fünfte Stromschalter (164) ausgebildet ist, Strom in Reaktion auf das erste Nebenschlusssteuersignal (Q5ₒₙ) zu leiten, und wobei die erste Diode (166) ausgebildet ist, einen Stromfluss zwischen dem ersten Zwischenknoten (114) und dem zweiten Zwischenknoten (120) zu blockieren; und
wobei der zweite Nebenschlussstromkreis (140) einen sechsten Stromschalter (168) und eine zweite Diode (170) aufweist, die zwischen dem vierten Zwischenknoten (134) und dem dritten Zwischenknoten (128) in Reihe geschaltet ist, wobei der sechste Stromschalter (168) ausgebildet ist, Strom in Reaktion auf das zweite Nebenschlusssteuersignal (Q6ₒₙ) zu leiten, und wobei die zweite Diode (170) ausgebildet ist, einen Stromfluss zwischen dem dritten Zwischenknoten (128) und dem vierten Zwischenknoten (134) zu blockieren.

9. Vorrichtung nach Anspruch 7 oder 8, die ferner einen Kondensator (196) aufweist, der zwischen dem ersten und dem zweiten Lastknoten (108 und 110) angeschlossen ist, wobei der Kondensator (196) ausgebildet ist, in Kombination mit der ersten, der zweiten, der dritten und der vierten Induktivität (118, 122, 132, 136) Wechselstromfrequenzkomponenten bei Frequenzen abzuschwächen, die nicht einer zu der Wechselstromsignalform gehörenden Grundschwingung entsprechen.

10. Vorrichtung nach einem der Ansprüche 7-9, wobei die Steuerung (142) funktionsmäßig ausgebildet ist, das erste, zweite, dritte und vierte pulsbreitenmodulierte Schaltsteuersignal (Q1ₒₙ, Q2ₒₙ, Q3ₒₙ, Q4ₒₙ) zu erzeugen.

11. Vorrichtung nach einem der Ansprüche 7-10, wobei die Steuerung (142) funktionsmäßig ausgebildet ist, das erste Nebenschlusssteuersignal (Q5ₒₙ) im Wesentlichen während der gesamten positiven Halbwelle zu setzen, wodurch der erste Nebenschlussstromkreis (126) veranlasst wird, einen Stromfluss während im Wesentlichen der gesamten positiven Halbwelle zuzulassen, und wobei die Steuerung (142) funktionsmäßig ausgebildet ist, das zweite Nebenschlusssteuersignal (Q6ₒₙ) im Wesentlichen während der gesamten negativen Halbwelle zu setzen, wodurch der zweite Nebenschlussstromkreis (140) veranlasst wird, einen Stromfluss während im Wesentlichen der gesamten negativen Halbwelle zuzulassen.

12. Vorrichtung nach einem der Ansprüche 7-11, wobei die Steuerung (142) funktionsmäßig ausgebildet ist, das erste Nebenschlusssteuersignal (Q5ₒₙ) während der zweiten Zeitspanne der positiven Halbwelle zu setzen, wodurch der erste Nebenschlussstromkreis (126) veranlasst wird, einen Stromfluss während der zweiten Zeitspanne selektiv zuzulassen, und wobei die Steuerung (142) funktionsmäßig ausgebildet ist, das zweite Nebenschlusssteuersignal (Q6ₒₙ) während der vierten Zeitspanne der negativen Halbwelle zu setzen, wodurch der zweite Nebenschlussstromkreis (140) veranlasst wird, selektiv einen Stromfluss während der vierten Zeitspanne zu verhindern.

13. Vorrichtung nach Anspruch 12, wobei die Steuerung (142) funktionsmäßig ausgebildet ist, das erste Nebenschlusssteuersignal (Q5ₒₙ) zu erzeugen, indem das erste Schaltsteuersignal invertiert wird, und das zweite Nebenschlusssteuersignal (Q6ₒₙ) zu erzeugen, indem das dritte Steuersignal invertiert wird.

14. Vorrichtung nach einem der Ansprüche 7-13, die ferner umfasst:
eine dritte Diode (184), die angeschlossen ist, Strom zwischen dem zweiten Zwischenknoten (120) und dem ersten Quellenknoten (102) zu leiten;
eine vierte Diode (186), die angeschlossen ist, Strom zwischen dem zweiten Quellenknoten (104) und dem ersten Zwischenknoten (114) zu leiten;
eine fünfte Diode (188), die angeschlossen ist, Strom zwischen dem vierten Zwischenknoten (134) und dem ersten Quellenknoten (102) zu leiten; und
eine sechste Diode (190), die angeschlossen ist, Strom zwischen dem zweiten Quellenknoten (104) und dem dritten Zwischenknoten (128) zu leiten;
und wobei die Steuerung (142) funktionsmäßig ausgebildet ist, um:
das erste Nebenschlusssteuersignal (Q5ₒₙ) während eines ersten Teils der positiven Halbwelle zu setzen und das erste Nebenschlusssteuersignal (Q5ₒₙ) während eines zweiten Teils der positiven Halbwelle nicht zu setzen, wodurch der erste Nebenschlussstromkreis (126) veranlasst wird, einen Stromfluss während des ersten Teils der positiven Halbwelle selektiv zuzulassen, und wobei der erste Rückstrom von dem zweiten Zwischenknoten (120) durch die erste Diode (184) zu dem ersten Quellenknoten (102) und von dem zweiten Quellenknoten (104) durch die vierte Diode (186) zu dem ersten Zwischenknoten (114) während des zweiten Teils der positiven Halbwelle fließt; und
das zweite Nebenschlusssteuersignal (Q6ₒₙ) während eines ersten Teils der negativen Halbwelle zu setzen und das zweite Nebenschlusssteuersignal (Q6ₒₙ) während eines zweiten Teils der negativen Halbwelle nicht zu setzen, wodurch der zweite Nebenschlussstromkreis (140) veranlasst wird, einen Stromfluss während des ersten Teils der negativen Halbwelle selektiv zuzulassen, und wobei der zweite Rückstrom von dem zweiten Zwischenknoten (120) durch die fünfte Diode (188) zu dem ersten Quellenknoten (102) und von dem zweiten Quellenknoten (104) durch die sechste Diode (190) zu dem ersten Zwischenknoten (114) während des zweiten Teils der negativen Halbwelle fließt.

15. Vorrichtung nach einem der Ansprüche 7-14, wobei die Last eine Last eines Leistungsversorgungsnetzes umfasst und wobei die Steuerung (142) funktionsmäßig ausgebildet ist, ein Referenzsignal (V_{ref}) zu empfangen, das eine Signalform der Netzspannung des Leistungsversorgungsnetzes zwischen dem ersten und dem zweiten Lastknoten (108 und 110) repräsentiert, und um das erste, zweite, dritte und vierte Schaltsteuersignal (Q1ₒₙ. Q2ₒₙ, Q3ₒₙ, Q4ₒₙ) und das erste und das zweite Nebenschlusssteuersignal (Q5_{on,} Q6ₒₙ) in Reaktion auf das Referenzsignal (V_{ref}) zu erzeugen, um zu bewirken, dass ein Ausgangsstrom dem Leistungsversorgungsnetz entweder im Wesentlichen in Phase mit der Signalform der Netzspannung oder außer Phase mit der Signalform der Netzspannung zugeführt wird.

## Revendications

1. Procédé de conversion d'un courant continu reçu depuis une source de courant continu (106) en un courant alternatif sur un premier et un deuxième noeud de charge (108 et 110), le procédé comprenant :
la production d'un demi-cycle positif de courant alternatif sur les premier et deuxième noeuds de charge (108 et 110) par :
envoi d'un courant circulant de la source à travers un premier commutateur (116), un premier noeud intermédiaire (114) et une première bobine d'induction (118) dans le premier noeud de charge (108) pendant une première période de temps, ledit premier commutateur (116) pouvant être actionné pour conduire de manière sélective le courant du premier noeud source (102) audit premier noeud intermédiaire (114) ;
circulation d'un premier courant de retour du deuxième noeud de charge (110) à travers un deuxième noeud intermédiaire (120), un deuxième commutateur (124) et une deuxième bobine d'induction (122) couplée au deuxième noeud de charge (110) et un deuxième commutateur (124) pouvant être actionné pour conduire de manière sélective le courant dudit deuxième noeud intermédiaire (120) au deuxième noeud source (104) ; et
pendant une deuxième période de temps, circulation dudit premier courant de retour à travers un premier shunt (126) dudit deuxième noeud intermédiaire (120) audit premier noeud intermédiaire (114) et à travers ladite première bobine d'induction (118) en retour vers le premier noeud de charge (108), ledit premier shunt (126) étant configuré pour empêcher un courant de circuler dudit premier noeud intermédiaire (114) audit deuxième noeud intermédiaire (120) et pour conduire de manière sélective un courant entre ledit deuxième noeud intermédiaire (120) et ledit premiers noeud intermédiaire (114) en réponse à un premier signal de commande de shunt (Q5ₒₙ) ;
production d'un demi-cycle négatif par :
envoi d'un courant circulant de la source à travers un troisième noeud intermédiaire (128), un troisième commutateur (130) et une troisième bobine d'induction (132) couplée au deuxième noeud de charge (110) pendant une troisième période de temps, ledit troisième commutateur (130) pouvant être actionné pour conduire de manière sélective un courant du premier noeud source (102) audit troisième noeud intermédiaire (128) ;
circulation d'un deuxième courant de retour du premier noeud de charge (108) à travers un quatrième noeud intermédiaire (134), un quatrième commutateur (Q4) et une quatrième bobine d'induction (136) couplée au premier noeud de charge (108), ledit quatrième commutateur (Q4) pouvant être actionné pour conduire de manière sélective un courant dudit quatrième noeud intermédiaire (134) au deuxième noeud source (104) ; et
pendant une quatrième période de temps, circulation dudit deuxième courant de retour à travers un deuxième shunt (140) dudit quatrième noeud intermédiaire (134) audit troisième noeud intermédiaire (128) et à travers ladite troisième bobine d'induction (132) en retour vers le deuxième noeud de charge (110), ledit deuxième shunt (140) étant configuré pour empêcher un courant de circuler dudit troisième noeud intermédiaire (128) audit quatrième noeud intermédiaire (134) et pour conduire de manière sélective un courant entre ledit quatrième noeud intermédiaire (134) et ledit troisième noeud intermédiaire (128) en réponse à un deuxième courant de commande de shunt (Q6ₒₙ).

2. Procédé selon la revendication 1, dans lequel ledit premier shunt (126) comprend un cinquième commutateur de courant (164) et une première diode (166) connectée en série entre ledit deuxième noeud intermédiaire (120) et ledit premier noeud intermédiaire (114), ledit cinquième commutateur de courant (164) pouvant être actionné pour conduire un courant en réponse audit premier signal de commande de shunt (Q5ₒₙ) et ladite première diode (166) pouvant être actionnée pour bloquer la circulation de courant entre ledit premier noeud intermédiaire (114) et ledit deuxième noeud intermédiaire (120) et dans lequel ledit deuxième shunt (140) comprend un sixième commutateur de courant (168) et une deuxième diode (170) connectée en série entre ledit quatrième noeud intermédiaire (134) et ledit troisième noeud intermédiaire (128), ledit sixième commutateur de courant (168) pouvant être actionné pour conduire un courant en réponse audit deuxième signal de commande de shunt (Q6ₒₙ), et ladite deuxième diode (170) pouvant être actionnée pour bloquer la circulation de courant entre ledit troisième noeud intermédiaire (128) et ledit quatrième noeud intermédiaire (134).

3. Procédé selon la revendication 1 ou 2, dans lequel des premier, deuxième, troisième et quatrième signaux de commande de commutation modulés par largeur d'impulsion sont produits pour commander lesdits premier, deuxième, troisième et quatrième commutateurs (116, 124, 130, 138).

4. Procédé selon l'une des revendications 1 à 3, dans lequel ledit premier signal de commande de shunt (Q5ₒₙ) inverse un signal de commande de commutation vers ledit premier commutateur (116) et dans lequel ledit deuxième signal de commande de shunt (Q6ₒₙ) inverse un signal de commande de commutation vers ledit troisième commutateur (130).

5. Procédé selon l'une des revendications 1 à 4, dans lequel ledit premier signal de commande de shunt (Q5ₒₙ) est positionné pendant une première partie dudit demi-cycle positif et ledit premier signal de commande de shunt (Q5ₒₙ) n'est pas positionné pendant la deuxième partie dudit demi-cycle positif, produisant ainsi l'autorisation sélective par ledit premier shunt (126) de circulation de courant pendant ladite première partie dudit demi-cycle positif, et dans lequel ledit premier courant de retour circule dudit deuxième ne intermédiaire (120) à travers une troisième diode (184) vers le premier noeud source (102) et du deuxième noeud source (104) à travers une quatrième diode (186) vers ledit premier noeud intermédiaire (114) pendant ladite deuxième partie dudit demi-cycle positif ; et
ledit deuxième signal de commande de shunt (Q6ₒₙ) est positionné pendant une première partie dudit demi-cycle négatif et ledit deuxième signal de commande de shunt (Q6ₒₙ) n'est pas positionné pendant une deuxième partie dudit demi-cycle négatif, produisant ainsi l'autorisation sélective par ledit deuxième shunt (140) de circulation de courant pendant ladite première partie dudit demi-cycle négatif, et dans lequel ledit deuxième courant de retour circule dudit deuxième noeud intermédiaire (120) à travers une cinquième diode (188) vers le premier noeud source (102) et du deuxième noeud source (104) à travers une sixième diode (190) vers ledit premier noeud intermédiaire (114) pendant ladite deuxième partie dudit demi-cycle négatif.

6. Procédé selon l'une des revendications 1 à 5, dans lequel la charge comprend une charge de réseau électrique et comprenant en outre la réception d'un signal de référence (V_{ref}) représentant une forme d'onde de tension de réseau du réseau électrique à travers les premier et deuxième noeuds de charge (108 et 110) et dans lequel lesdits premier et deuxième signaux de commande de shunt (Q5ₒₙ, Q6ₒₙ) et lesdits premier, deuxième, troisième et quatrième commutateurs (116, 124, 130, 138) sont commandés en réponse audit signal de référence (V_{ref}) pour que le courant de sortie soit fourni au réseau électrique, soit sensiblement en phase avec la forme d'onde de tension du réseau, soit n'étant pas en phase avec la forme d'onde de tension du réseau.

7. Dispositif de conversion d'un courant continu en un courant alternatif, le dispositif comprenant :
des premier et deuxième noeuds source (102 et 104) couplés à une source de courant continu (106) ;
des premier et deuxième noeuds de charge (108 et 110) pour délivrer un courant alternatif ;
un premier noeud intermédiaire (114) ;
un premier commutateur (116) pouvant être actionné pour conduire de manière sélective un courant dudit premier noeud source (102) audit premier noeud intermédiaire (114) ;
une première bobine d'induction (118) connectée entre ledit premier noeud intermédiaire (114) et ledit premier noeud de charge (108) ;
un deuxième noeud intermédiaire (120) ;
une deuxième bobine d'induction (122) connectée entre ledit deuxième noeud de charge (110) et ledit deuxième noeud intermédiaire (120) ;
un deuxième commutateur (124) pouvant être actionné pour conduire de manière sélective un courant dudit deuxième noeud intermédiaire (120) audit deuxième noeud source (104) ;
un premier shunt (126) configuré de manière fonctionnelle pour empêcher un courant de circuler dudit premier noeud intermédiaire (114) audit deuxième noeud intermédiaire (120) et pour conduire de manière sélective un courant entre ledit deuxième noeud intermédiaire (120) et ledit premier noeud intermédiaire (114) en réponse à un premier signal de commande de shunt (Q5ₒₙ) ;
un troisième noeud intermédiaire (128) ;
un troisième commutateur (130) pouvant être actionné pour conduire de manière sélective un courant dudit premier noeud source (102) audit troisième noeud intermédiaire (128) ;
une troisième bobine d'induction (132) connectée entre ledit troisième noeud intermédiaire (128) et ledit premier noeud de charge (108) ;
un quatrième noeud intermédiaire (134) ;
une quatrième bobine d'induction (136) connectée entre ledit deuxième noeud de charge (110) et ledit quatrième noeud intermédiaire (134) ;
un quatrième commutateur de courant (138) pouvant être actionné pour conduire de manière sélective un courant dudit quatrième noeud intermédiaire (134) audit deuxième noeud source (104) ;
un deuxième shunt (140) configuré de manière fonctionnelle pour empêcher un courant de circuler dudit troisième noeud intermédiaire (128) audit quatrième noeud intermédiaire (134) et pour conduire de manière sélective un courant entre ledit quatrième noeud intermédiaire (134) et ledit troisième noeud intermédiaire (128) en réponse à un deuxième signal de commande de shunt (140) (Q6ₒₙ) ; et
un contrôleur (142) configuré de manière fonctionnelle pour générer des premier, deuxième, troisième et quatrième signaux de commande de commutation (Q1ₒₙ, Q2ₒₙ, Q3ₒₙ, Q4ₒₙ) et lesdits premier et deuxième signaux de commande de shunt (Q5ₒₙ, Q6ₒₙ) pour commander lesdits premier, deuxième, troisième et quatrième commutateurs (116, 124, 130, 138) et lesdits premier et deuxième shunts (126, 140) pour produire des demi-cycles positifs et négatifs du courant alternatif ;
ledit demi-cycle positif étant produit par envoi par lesdits premier et deuxième signaux de commande de commutation (Q1ₒₙ, Q2ₒₙ) d'un courant circulant de la source à travers ledit premier noeud intermédiaire (114), le premier commutateur (Q1) et la première bobine d'induction (118) dans ledit premier noeud de charge (108) pendant ladite première période de temps,
envoi par ledit deuxième noeud de charge (110) d'un courant de retour circulant à travers ledit deuxième noeud intermédiaire (120), le deuxième commutateur (124) et la deuxième bobine d'induction (122) pendant ladite première période de temps ; et
pendant ladite deuxième période de temps, ledit premier signal de commande de shunt (Q5ₒₙ) est positionné pour faire circuler ledit premier courant de retour à travers ledit premier shunt (126) dudit deuxième noeud intermédiaire (120) audit premier noeud intermédiaire (114) et à travers ladite première bobine d'induction (118) en retour vers le premier noeud de charge (108) ;
ledit demi-cycle négatif étant produit en faisant en sorte que lesdits troisième et quatrième signaux de commande de commutation (Q3ₒₙ, Q4ₒₙ) :
envoient un courant circulant de la source à travers ledit troisième noeud intermédiaire (128), une troisième bobine d'induction (132) et un troisième commutateur (130), audit deuxième noeud de charge (110) pendant ladite troisième période de temps ;
envoient un deuxième courant de retour circulant dudit premier noeud de charge (108) à travers ledit quatrième noeud intermédiaire (134), une quatrième bobine d'induction (136) et un quatrième commutateur (Q4) pendant ladite troisième période de temps ; et
pendant ladite quatrième période de temps, ledit deuxième signal de commande de shunt (Q6ₒₙ) est positionné pour faire circuler ledit deuxième courant de retour à travers ledit deuxième shunt (140) dudit quatrième noeud intermédiaire (134) audit troisième noeud intermédiaire (128) et à travers ladite troisième bobine d'induction (132) en retour vers le deuxième noeud de charge (110).

8. Dispositif selon la revendication 7, dans lequel ledit premier shunt (126) comprend un cinquième commutateur de courant (164) et une première diode (166) connectée en série entre ledit deuxième noeud intermédiaire (120) et ledit premier noeud intermédiaire (114), ledit cinquième commutateur de courant (164) pouvant être actionné pour conduire un courant en réponse audit premier signal de commande de shunt (Q5ₒₙ) et ladite première diode (166) pouvant être actionnée pour bloquer la circulation de courant entre ledit premier noeud intermédiaire (114) et ledit deuxième noeud intermédiaire (120) ; et
ledit deuxième shunt (140) comprend un sixième commutateur de courant (168) et une deuxième diode (170) connectée en série entre ledit quatrième noeud intermédiaire (134) et ledit troisième noeud intermédiaire (128), ledit sixième commutateur de courant (168) pouvant être actionné pour conduire un courant en réponse audit deuxième signal de commande de shunt (Q6ₒₙ), et ladite deuxième diode (170) pouvant être actionnée pour bloquer la circulation de courant entre ledit troisième noeud intermédiaire (128) et ledit quatrième noeud intermédiaire (134).

9. Dispositif selon la revendication 7 ou 8, comprenant en outre un condensateur (196) connecté entre lesdits premier et deuxième noeuds de charge (108 et 110), ledit condensateur (196) pouvant être actionné, en combinaison avec lesdites première, deuxième, troisième et quatrième bobines d'induction (118, 122, 132, 136) pour atténuer les composantes de fréquence de courant alternatif aux fréquences autres qu'une fréquence fondamentale associée avec la forme d'onde de courant alternatif.

10. Dispositif selon l'une des revendications 7 à 9, dans lequel ledit contrôleur (142) est configuré de manière fonctionnelle pour produire des premier, deuxième, troisième et quatrième signaux de commande de commutation modulés par largeur d'impulsion (Q1ₒₙ, Q2ₒₙ, Q3ₒₙ, Q4ₒₙ).

11. Dispositif selon l'une des revendications 7 à 10, dans lequel ledit contrôleur (142) est configuré de manière fonctionnelle pour positionner ledit premier signal de commande de shunt (Q5ₒₙ) sensiblement pendant la totalité dudit demi-cycle positif, provoquant ainsi l'autorisation d'une circulation de courant par ledit premier shunt (126) sensiblement pendant la totalité dudit demi-cycle positif, et dans lequel ledit contrôleur (142) est configuré de manière fonctionnelle pour positionner ledit deuxième signal de commande de shunt (Q6ₒₙ) sensiblement pendant la totalité dudit demi-cycle négatif, provoquant ainsi l'autorisation d'une circulation de courant par ledit deuxième shunt (140) sensiblement pendant la totalité dudit demi-cycle négatif.

12. Dispositif selon l'une des revendications 7 à 11, dans lequel ledit contrôleur (142) est configuré de manière fonctionnelle pour positionner ledit premier signal de commande de shunt (Q5ₒₙ) pendant lesdites deuxièmes périodes de temps dudit demi-cycle positif, provoquant ainsi l'autorisation sélective d'une circulation de courant par ledit premier shunt (126) pendant lesdites deuxièmes périodes de temps, et dans lequel ledit contrôleur (142) est configuré de manière fonctionnelle pour positionner ledit deuxième signal de commande de shunt (Q6ₒₙ) pendant lesdites quatrièmes périodes de temps dudit demi-cycle négatif, provoquant ainsi l'autorisation sélective d'une circulation de courant par ledit deuxième shunt (140) pendant lesdites quatrièmes périodes de temps.

13. Dispositif selon la revendication 12, dans lequel ledit contrôleur (142) est configuré de manière fonctionnelle pour produire ledit premier signal de commande de shunt (Q5ₒₙ) par inversion dudit premier signal de commande de commutation et pour produire ledit deuxième signal de commande de shunt (Q6ₒₙ) par inversion dudit troisième signal de commande de commutation.

14. Dispositif selon l'une des revendications 7 à 13, comprenant en outre :
une troisième diode (184) connectée pour conduire un courant entre ledit deuxième noeud intermédiaire (120) et ledit premier noeud source (102) ;
une quatrième diode (186) connectée pour conduire un courant entre ledit deuxième noeud source (104) et ledit premier noeud intermédiaire (114) ;
une cinquième diode (188) connectée pour conduire un courant entre ledit quatrième noeud intermédiaire (134) et ledit premier noeud source (102) ; et
une sixième diode (190) connectée pour conduire un courant entre ledit deuxième noeud source (104) et ledit troisième noeud intermédiaire (128) ;
et dans lequel ledit contrôleur (142) est configuré de manière fonctionnelle pour :
positionner ledit premier signal de commande de shunt (Q5ₒₙ) pendant une première partie dudit demi-cycle positif et ne pas positionner ledit premier signal de commande de shunt (Q5ₒₙ) pendant une deuxième partie dudit demi-cycle positif, de façon que ledit premier shunt (126) autorise de manière sélective une circulation de courant pendant ladite première partie dudit demi-cycle positif, et dans lequel ledit premier courant de retour circule dudit deuxième noeud intermédiaire (120) à travers ladite troisième diode (184), audit premier noeud source (102) et du deuxième noeud source (104) à travers ladite quatrième diode (186) audit premier noeud intermédiaires (114) pendant ladite deuxième partie dudit demi-cycle positif ; et
positionner ledit deuxième signal de commande de shunt (Q6ₒₙ) pendant une première partie dudit demi-cycle négatif et ne pas positionner ledit deuxième signal de commande de shunt (Q6ₒₙ) pendant une deuxième partie dudit demi-cycle négatif, provoquant ainsi l'autorisation sélective d'une circulation de courant par ledit deuxième shunt (140) pendant ladite première partie dudit demi-cycle négatif, et dans lequel ledit deuxième courant de retour circule dudit deuxième noeud intermédiaire (120) à travers ladite cinquième diode (188) au premier noeud source (102) et du deuxième noeud source (104) à travers ladite sixième diode (190) audit premier noeud intermédiaire (114) pendant ladite deuxième partie dudit demi-cycle négatif.

15. Dispositif selon l'une des revendications 7 à 14, dans lequel la charge comprend une charge de réseau électrique et dans lequel ledit contrôleur (142) est configuré de manière fonctionnelle pour recevoir un signal de référence (V_{ref}) représentant une forme d'onde de tension de réseau du réseau électrique à travers lesdits premier et deuxième noeuds de charge (108 et 110) et pour produire lesdits premier, deuxième, troisième et quatrième signaux de commande de commutation (Q1ₒₙ, Q2ₒₙ, Q3ₒₙ, Q4ₒₙ) et lesdits premier et deuxième signaux de commande de shunt (Q5ₒₙ, Q6ₒₙ) en réponse audit signal de référence (V_{ref}) pour fournir un courant de sortie au réseau électrique, soit sensiblement en phase avec la forme d'onde de tension du réseau, soit n'étant pas en phase avec la forme d'onde de tension du réseau.
